(19) **Europäisches Patentamt / European Patent Office / Office européen des brevets**

(11) **EP 4 436 256 A1**

(12) **EUROPEAN PATENT APPLICATION**
published in accordance with Art. 153(4) EPC

(43) Date of publication:
**25.09.2024 Bulletin 2024/39**

(21) Application number: **22918407.2**

(22) Date of filing: **21.12.2022**

(51) International Patent Classification (IPC):
*H04W 36/00* (2009.01)

(52) Cooperative Patent Classification (CPC):
**H04W 16/28; H04W 28/08; H04W 28/082;
H04W 36/00; H04W 36/08**

(86) International application number:
**PCT/CN2022/140753**

(87) International publication number:
**WO 2023/130964 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2022 CN 202210012904**

(71) Applicant: **Huawei Technologies Co., Ltd.
Shenzhen, Guangdong 518129 (CN)**

(72) Inventors:
• **WU, Xiaoning**
  **Shenzhen, Guangdong 518129 (CN)**
• **ZENG, Yu**
  **Shenzhen, Guangdong 518129 (CN)**
• **GENG, Tingting**
  **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **INFORMATION CONFIGURATION METHOD AND APPARATUS AND RELATED DEVICE**

(57)    This application provides an information configuration method and apparatus, and a related device. The method includes: sending a first message to a first access network device, where the first message indicates the first access network device to configure a handover trigger threshold change value of a first beam and/or a probability of handing over a terminal device to the first beam (501); and receiving a second message from the first access network device, where the second message indicates that the first access network device succeeds in configuration and/or that the first access network device fails in configuration. The information configuration method can implement beam-level handover HO/conditional handover CHO.

FIG. 5

EP 4 436 256 A1

**Description**

This application claims priority to Chinese Patent Application No. 202210012904.0, filed with the China National Intellectual Property Administration on January 6, 2022 and entitled "INFORMATION CONFIGURATION METHOD AND APPARATUS, AND RELATED DEVICE", which is incorporated herein by reference in its entirety.

**TECHNICAL FIELD**

This application relates to the field of communication technologies, and in particular, to an information configuration method and apparatus, and a related device.

**BACKGROUND**

In a mobile communication system, user equipment handover can be implemented in both a handover (handover, HO) procedure and a conditional handover (conditional handover, CHO) procedure. Current HO/CHO is cell-level handover. As an access capability of an access network device is enhanced, for example, a multiple-input multiple-output (multiple-input multiple-output, MIMO) technology is applied, a current handover solution cannot meet a requirement of a communication system.

**SUMMARY**

This application provides an information configuration method and apparatus, and a related device. Beam-level HO/CHO can be implemented in the information configuration method.

According to a first aspect, this application provides an information configuration method. The information configuration method is implemented by a second access network device, may be performed by a component (for example, a processor, a chip, or a chip system) of the second access network device, or may be implemented by a logical module or software that can implement all or some functions of the second access network device. The second access network device sends a first message to a first access network device. The first message indicates the first access network device to configure a handover trigger threshold change value of a first beam and/or a probability of handing over a terminal device to the first beam. The second access network device receives a second message from the first access network device. The second message indicates that the first access network device succeeds in configuration and/or that the first access network device fails in configuration.

According to the method, beam-level related configuration information can be added to a mobility configuration change procedure and/or a handover procedure. The second access network device (for example, a source base station) may indicate the first access network device (for example, a target base station) to properly adjust an access threshold of the first beam. For example, an access threshold of a beam with relatively heavy load in the second access network device may be appropriately increased, and the second access network device indicates that an access threshold of a beam with relatively light load in the first access network device may be appropriately reduced, so that a user of the beam with the relatively heavy load in the second access network device is handed over to the beam with the relatively light load in the first access network device, thereby implementing beam load balancing. In addition/alternatively, the second access network device may indicate the first access network device to prepare a beam-level handover resource. For example, if a probability that the terminal device is handed over to a beam in the first access network device is relatively high, the first access network device may adjust, in advance, another terminal device suitable for the beam to access another beam. Therefore, the beam can reserve more resources for the terminal device that is to access the beam, to facilitate beam load balancing.

In a possible implementation, the first message includes handover trigger configuration information of the first beam. The handover trigger configuration information of the first beam includes beam indication information of the first beam and/or proposed mobility parameters information of the first beam. The proposed mobility parameters information of the first beam includes a proposed handover trigger threshold change value of the first beam and/or a proposed handover trigger threshold of the first beam. According to the method, beam-level handover trigger configuration information can be added to related parameters of a mobility configuration change, to facilitate beam load balancing. It should be noted that the second access network device may propose handover trigger threshold adjustment to the first access network device with reference to a load status of the first beam and a load status of a second beam. It may be understood that the first access network device and the second access network device may exchange load statuses of respective beams.

In a possible implementation, the first message further includes handover trigger configuration information of the second beam of the second access network device. The handover trigger configuration information of the second beam includes beam indication information of the second beam and/or mobility parameters information of the second beam. The mobility parameters information of the second beam includes a handover trigger threshold change value of the second beam and/or a handover trigger threshold of the second beam. According to the method, the second access network device may also send the handover trigger threshold change value of the second beam to the first access network device, to facilitate beam load balancing between base stations.

In a possible implementation, the first message includes cause information of sending the first message. The cause information of the first message indicates a handover trigger configuration cause of the first beam and/or a handover trigger configuration cause of the second beam. According to the method, a reason for initiating a beam-level mobility change request may be further indicated to the target base station.

In a possible implementation, the second message includes one or more of the following: the beam indication information of the first beam, mobility change acknowledge criticality diagnostics information of the first beam, the beam indication information of the second beam, and mobility change acknowledge criticality diagnostics information of the second beam. The mobility change acknowledge criticality diagnostics information of the first beam indicates that partial information of the first beam in the first message is incorrect. The mobility change acknowledge criticality diagnostics information of the second beam indicates that partial information of the second beam in the first message is incorrect. According to the method, beam-level mobility change acknowledge information can be added to related parameters of a mobility change acknowledge message. For example, the second message may indicate that partial information of the first beam in the first message is not parsed, partial information of the first beam in the first message is lost, or partial information of the first beam in the first message has a logic error. The second message may further indicate that partial information of the second beam in the first message is not parsed, partial information of the second beam in the first message is lost, or partial information of the second beam in the first message has a logic error.

In a possible implementation, the second message includes one or more of the following: the beam indication information of the first beam, mobility change failure cause information of the first beam, mobility change failure criticality diagnostics information of the first beam, mobility parameters modification range information of the first beam, the beam indication information of the second beam, and mobility change failure criticality diagnostics information of the second beam. The mobility change failure cause information of the first beam indicates a reason why the first access network device sends the second message for the first beam. The second message indicates that the first access network device fails in configuration. The mobility parameters modification range information of the first beam indicates an allowed modification range of the handover trigger threshold change value of the first beam. According to the method, beam-level mobility change failure information can be added to related parameters of a mobility change failure message. For example, the second message may indicate that the target base station fails in configuration. In this case, the second message may further indicate the allowed modification range of the handover trigger threshold change value of the first beam.

In a possible implementation, the first message includes a conditional handover request message of the first beam. The conditional handover request message of the first beam includes beam indication information of the first beam and/or estimated arrival probability information of the first beam. The estimated arrival probability information of the first beam indicates the probability of handing over the terminal device to the first beam. According to the method, beam-level request information can be added to related parameters of a handover request message, to facilitate beam load balancing.

In a possible implementation, the second message includes information about the maximum number of conditional handover preparations of the first beam. The information about the maximum number of conditional handover preparations of the first beam indicates the maximum number of candidate first beams for conditional handover. According to the method, beam-level request acknowledge information can be added to related parameters of a handover request acknowledge message, to facilitate beam load balancing.

According to a second aspect, this application provides another information configuration method. The information configuration method is implemented by a first access network device, may be performed by a component (for example, a processor, a chip, or a chip system) of the first access network device, or may be implemented by a logical module or software that can implement all or some functions of the first access network device. The first access network device sends a third message to a second access network device. The third message indicates the second access network device to configure a handover trigger threshold change value of a second beam. The first access network device receives a fourth message from the second access network device. The fourth message indicates that the second access network device succeeds in configuration and/or that the second access network device fails in configuration.

According to the method, the first access network device (for example, a target base station) may send a proposed handover trigger threshold change value of the second beam to the second access network device (for example, a source base station), so that the target base station indicates the source base station to properly adjust an access threshold of the second beam. For example, an access threshold of a beam with relatively heavy load in the first access network device may be appropriately increased, and the first access network device indicates that an access threshold of a beam with relatively light load in the second access network device may be appropriately reduced, so that a user of the beam with the relatively heavy load in the first access network device is handed over to the beam with the relatively light load in the second access network device, thereby implementing beam load balancing. It may be understood that, in this scenario, alternatively, the source base station and the target base station may not be distinguished, and it is merely an information exchange procedure between base stations.

In a possible implementation, the third message includes handover trigger configuration information of a first beam. The handover trigger configuration information of the first beam includes beam indication information of the first beam and/or mobility parameters information of the first beam. The mobility parameters information of the first beam includes a handover trigger threshold change value of the first beam and/or a handover trigger threshold of the first beam. According to the method, beam-level handover trigger configuration information can be added to related parameters of a mobility change request message, to facilitate beam load balancing.

In a possible implementation, the third message further includes handover trigger configuration information of the second beam of the second access network device. The handover trigger configuration information of the second beam includes beam indication information of the second beam and/or proposed mobility parameters information of the second beam. The proposed mobility parameters information of the second beam includes a proposed handover trigger threshold change value of the second beam and/or a proposed handover trigger threshold of the second beam. According to the method, the first access network device may also send the proposed handover trigger threshold change value of the second beam to the second access network device, to facilitate beam load balancing between base stations.

In a possible implementation, the third message includes cause information of sending the third message. The cause information of the third message indicates a handover trigger configuration cause of the first beam and/or a handover trigger configuration cause of the second beam. According to the method, a reason for initiating a beam-level mobility change request may be further indicated to the source base station.

In a possible implementation, the fourth message includes one or more of the following: the beam indication information of the first beam, mobility change acknowledge criticality diagnostics information of the first beam, the beam indication information of the second beam, and mobility change acknowledge criticality diagnostics information of the second beam. The mobility change acknowledge criticality diagnostics information of the first beam indicates that partial information of the first beam in the third message is incorrect. The mobility change acknowledge criticality diagnostics information of the second beam indicates that partial information of the second beam in the third message is incorrect. According to the method, beam-level mobility change acknowledge information can be added to related parameters of a mobility change acknowledge message.

In a possible implementation, the fourth message includes one or more of the following: the beam indication information of the second beam, mobility change failure cause information of the second beam, mobility change failure criticality diagnostics information of the second beam, mobility parameters modification range information of the second beam, the beam indication information of the first beam, and mobility change failure criticality diagnostics information of the first beam. The mobility change failure cause information of the second beam indicates a reason why the second access network device sends the fourth message for the second beam. The fourth message indicates that the second access network device fails in configuration. The mobility parameters modification range information of the second beam indicates an allowed modification range of the handover trigger threshold change value of the second beam. According to the method, beam-level mobility change failure information can be added to related parameters of a mobility change failure message.

According to a third aspect, this application provides still another information configuration method. The information configuration method is implemented by a second access network device, may be performed by a component (for example, a processor, a chip, or a chip system) of the second access network device, or may be implemented by a logical module or software that can implement all or some functions of the second access network device. The second access network device sends a fifth message to a terminal device. The fifth message includes conditional event configuration information for triggering, by the terminal device, access to a first access network device. The conditional event configuration information indicates a conditional event for triggering, by the terminal device, conditional handover for a first beam and a second beam.

According to the method, beam-level related configuration information can be added to a reconfiguration message, so that conditional handover can be performed with reference to measurement results of beams, and conditional determining can be performed for different beams, to facilitate more accurate handover, and further facilitate beam load balancing, thereby improving a cell capacity.

In a possible implementation, the second access network device receives a sixth message from the terminal device. The sixth message indicates that the terminal device succeeds in configuration.

In a possible implementation, the conditional event for triggering conditional handover for the first beam and the second beam is determined based on measurement results of the first beam and the second beam and configuration information for the first beam and the second beam. According to the method, it is further explained that the conditional event configuration information indicates a conditional event for a beam.

According to a fourth aspect, an embodiment of this application provides still another information configuration method. The information configuration method is implemented by a first access network device, may be performed by a component (for example, a processor, a chip, or a chip system) of the first access network device, or may be implemented by a logical module or software that can implement all or some functions of the first access network device. The first access network device receives a first message from a second access network device. The first message indicates the first access network device to configure a handover trigger threshold change value of a first beam and/or a probability of handing over a terminal device to the first beam. The first access network device sends a second message to the second access network device. The second message indicates that the first access network device succeeds in configuration and/or that the first access network device fails in configuration. According to the method, beam-level related configuration information can be added to a mobility configuration change procedure and/or a handover procedure, so that a user of a beam with relatively heavy load in the second access network device is handed over to a beam with relatively light load in the first access network device, thereby implementing beam load balancing.

In a possible implementation, the first message includes handover trigger configuration information of the first beam. The handover trigger configuration information of the first beam includes beam indication information of the first beam and/or proposed mobility parameters information of the first beam. The proposed mobility parameters information of the first beam includes a proposed handover trigger threshold change value of the first beam and/or a proposed handover trigger threshold of the first beam. According to the method, beam-level handover trigger configuration information can be added to related parameters of a mobility configuration change, to facilitate beam load balancing.

In a possible implementation, the first message further includes handover trigger configuration information of a second beam of the second access network device. The handover trigger configuration information of the second beam includes beam indication information of the second beam and/or mobility parameters information of the second beam. The mobility parameters information of the second beam includes a handover trigger threshold change value of the second beam and/or a handover trigger threshold of the second beam.

In a possible implementation, the first message includes cause information of sending the first message. The cause information of the first message indicates a handover trigger configuration cause of the first beam and/or a handover trigger configuration cause of the second beam. According to the method, a reason for initiating a beam-level mobility change request may be further indicated to a target base station.

In a possible implementation, the second message includes one or more of the following: the beam indication information of the first beam, mobility change acknowledge criticality diagnostics information of the first beam, the beam indication information of the second beam, and mobility change acknowledge criticality diagnostics information of the second beam. The mobility change acknowledge criticality diagnostics information of the first beam indicates that partial information of the first beam in the first message is incorrect. The mobility change acknowledge criticality diagnostics information of the second beam indicates that partial information of the second beam in the first message is incorrect. According to the method, beam-level mobility change acknowledge information can be added to related parameters of a mobility change acknowledge message.

In a possible implementation, the second message includes one or more of the following: the beam indication information of the first beam, mobility change failure cause information of the first beam, mobility change failure criticality diagnostics information of the first beam, mobility parameters modification range information of the first beam, the beam indication information of the second beam, and mobility change failure criticality diagnostics information of the second beam. The mobility change failure cause information of the first beam indicates a reason why the first access network device sends the second message for the first beam. The second message indicates that the first access network device fails in configuration. The mobility parameters modification range information of the first beam indicates an allowed modification range of the handover trigger threshold change value of the first beam. According to the method, beam-level mobility change failure information can be added to related parameters of a mobility change failure message.

In a possible implementation, the first message includes conditional handover request information of the first beam, and the conditional handover request information of the first beam includes estimated arrival probability information of the first beam. The estimated arrival probability information of the first beam indicates the probability of handing over the terminal device to the first beam. According to the method, beam-level request information can be added to related parameters of a handover request message, to facilitate beam load balancing.

In a possible implementation, the second message includes information about the maximum number of conditional handover preparations of the first beam. The information about the maximum number of conditional handover preparations of the first beam indicates the maximum number of candidate first beams for conditional handover. According to the method, beam-level request acknowledge information can be added to related parameters of a handover request acknowledge message, to facilitate beam load balancing.

According to a fifth aspect, this application provides still another information configuration method. The information configuration method is implemented by a second access network device, may be performed by a component (for example, a processor, a chip, or a chip system) of the second access network device, or may be implemented by a logical module or software that can implement all or some functions of the second access network device. The second access network device receives a third message from a first access network device. The third message indicates the second access network device to configure a handover trigger threshold change value of a second beam. The second access network device sends a fourth message to the first access network device. The fourth message indicates that the second access network device succeeds in configuration and/or that the second access network device fails in configuration. According to the method, the first access network device (for example, a target base station) may send a proposed handover trigger threshold change value of the second beam to the second access network device (for example, a source base station), so that the target base station indicates the source base station to properly adjust an access threshold of the second beam, to facilitate beam load balancing.

In a possible implementation, the third message includes handover trigger configuration information of a first beam. The handover trigger configuration information of the first beam includes beam indication information of the first beam and/or mobility parameters information of the first beam. The mobility parameters information of the first beam includes a handover trigger threshold change value of the first beam and/or a handover trigger threshold of the first beam. According to the method, beam-level handover trigger configuration information can be added to related parameters of a mobility change request message, to facilitate beam load balancing.

In a possible implementation, the third message further includes handover trigger configuration information of the second beam of the second access network device. The handover trigger configuration information of the second beam includes beam indication information of the second beam and/or proposed mobility parameters information of the second beam. The proposed mobility parameters information of the second beam includes a proposed handover trigger threshold change value of the second beam and/or a proposed handover trigger threshold of the second beam. According to the method, the first access network device may also send the proposed handover trigger threshold change value of the second beam to the second access network device, to facilitate beam load balancing between base stations.

In a possible implementation, the third message includes cause information of sending the third message. The cause information of the third message indicates a handover trigger configuration cause of the first beam and/or a handover trigger configuration cause of the second beam. According to the method, a reason for initiating a beam-level mobility change request may be further indicated to the source base station.

In a possible implementation, the fourth message includes one or more of the following: the beam indication information of the first beam, mobility change acknowledge criticality diagnostics information of the first beam, the beam indication information of the second beam, and mobility change acknowledge criticality diagnostics information of the second beam. The mobility change acknowledge criticality diagnostics information of the first beam indicates that partial information of the first beam in the third message is incorrect. The mobility change acknowledge criticality diagnostics information of the second beam indicates that partial information of the second beam in the third message is incorrect. According to the method, beam-level mobility change acknowledge information can be added to related parameters of a mobility change acknowledge message.

In a possible implementation, the fourth message includes one or more of the following: the beam indication information of the second beam, mobility change failure cause information of the second beam, mobility change failure criticality diagnostics information of the second beam, mobility parameters modification range information of the second beam, the beam indication information of the first beam, and mobility change failure criticality diagnostics information of the first beam. The mobility change failure cause information of the second beam indicates a reason why the second access network device sends the fourth message for the second beam. The fourth message indicates that the second access network device fails in configuration. The mobility parameters modification range information of the second beam indicates an allowed modification range of the handover trigger threshold change value of the second beam. According to the method, beam-level mobility change failure information can be added to related parameters of a mobility change failure message.

According to a sixth aspect, this application provides still another information configuration method. The information configuration method is implemented by a terminal device, may be performed by a component (for example, a processor, a chip, or a chip system) of the terminal device, or may be implemented by a logical module or software that can implement all or some functions of the terminal device. The terminal device receives a fifth message from a second access network device. The fifth message includes conditional event configuration information for triggering, by the terminal device, access to a first access network device. The conditional event configuration information indicates a conditional event for triggering, by the terminal device, conditional handover for a first beam and a second beam. According to the method, beam-level related configuration information can be added to a reconfiguration message, to facilitate more accurate handover, and further facilitate beam load balancing, thereby improving a cell capacity.

In a possible implementation, the terminal device sends a sixth message to the second access network device. The sixth message indicates that the terminal device succeeds in configuration.

In a possible implementation, the conditional event for triggering conditional handover for the first beam and the second beam is determined based on measurement results of the first beam and the second beam and configuration information for the first beam and the second beam. According to the method, it is further explained that the conditional event configuration information indicates a conditional event for a beam.

According to a seventh aspect, this application provides an information configuration apparatus. The information configuration apparatus includes a sending unit and a receiving unit. The sending unit is configured to send a first message to a first access network device. The first message indicates the first access network device to configure a handover trigger threshold change value of a first beam and/or a probability of handing over a terminal device to the first beam. The receiving unit is configured to receive a second message from the first access network device. The second message indicates that the first access network device succeeds in configuration and/or that the first access network device fails in configuration.

For specific implementations of the first message, the handover trigger threshold change value of the first beam, the probability of handing over the terminal device to the first beam, the second message, and the like, refer to the corresponding descriptions in the first aspect. Details are not described herein again.

According to an eighth aspect, this application provides another information configuration apparatus. The information configuration apparatus includes a sending unit and a receiving unit. The sending unit is configured to send a third message to a second access network device. The third message indicates the second access network device to configure a handover trigger threshold change value of a second beam. The receiving unit is configured to receive a fourth message from the second access network device. The fourth message indicates that the second access network device succeeds in configuration and/or that the second access network device fails in configuration.

For specific implementations of the third message, the fourth message, and the like, refer to the corresponding descriptions in the second aspect. Details are not described herein again.

According to a ninth aspect, this application provides still another information configuration apparatus. The information configuration apparatus includes a sending unit and a receiving unit. The sending unit is configured to send a fifth message to a terminal device. The fifth message includes conditional event configuration information for triggering, by the terminal device, access to a first access network device. The conditional event configuration information indicates a conditional event for triggering, by the terminal device, conditional handover for a first beam and a second beam.

For specific implementations of the fifth message and the conditional event configuration information, refer to the corresponding descriptions in the second aspect. Details are not described herein again.

According to a tenth aspect, this application provides still another information configuration apparatus. The information configuration apparatus includes a receiving unit and a sending unit. The receiving unit is configured to receive a first message from a second access network device. The first message indicates the first access network device to configure a handover trigger threshold change value of a first beam and/or a probability of handing over a terminal device to the first beam. The sending unit is configured to send a second message to the second access network device. The second message indicates that the first access network device succeeds in configuration and/or that the first access network device fails in configuration.

For specific implementations of the first message, the handover trigger threshold change value of the first beam, the probability of handing over the terminal device to the first beam, the second message, and the like, refer to the corresponding descriptions in the fourth aspect. Details are not described herein again.

According to an eleventh aspect, this application provides still another information configuration apparatus. The information configuration apparatus includes a receiving unit and a sending unit. The receiving unit is configured to receive a third message from a first access network device. The third message indicates the second access network device to configure a handover trigger threshold change value of a second beam. The sending unit is configured to send a fourth message to the first access network device. The fourth message indicates that the second access network device succeeds in configuration and/or that the second access network device fails in configuration.

For specific implementations of the third message, the fourth message, and the like, refer to the corresponding descriptions in the fifth aspect. Details are not described herein again.

According to a twelfth aspect, this application provides still another information configuration apparatus. The information configuration apparatus includes a receiving unit and a sending unit. The receiving unit is configured to receive a fifth message from a second access network device. The fifth message includes conditional event configuration information for triggering, by the terminal device, access to a first access network device. The conditional event configuration information indicates a conditional event for triggering, by the terminal device, conditional handover for a first beam and a second beam.

For specific implementations of the fifth message and the conditional event configuration information, refer to the corresponding descriptions in the sixth aspect. Details are not described herein again.

According to a thirteenth aspect, this application provides an access network device. The access network device includes one or more processors and a memory. The memory is coupled to the one or more processors, and the memory stores a computer program.

In a possible implementation, when the one or more processors execute the computer program, the access network device performs the following operations:

sending a first message to a first access network device, where the first message indicates the first access network device to configure a handover trigger threshold change value of a first beam and/or a probability of handing over a terminal device to the first beam; and

receiving a second message from the first access network device, where the second message indicates that the first access network device succeeds in configuration and/or that the first access network device fails in configuration.

For specific implementations of the first message, the handover trigger threshold change value of the first beam, the probability of handing over the terminal device to the first beam, the second message, and the like, refer to the corresponding descriptions in the first aspect. Details are not described herein again.

In a possible implementation, when the one or more processors execute the computer program, the access network device performs the following operations:

sending a third message to a second access network device, where the third message indicates the second access network device to configure a handover trigger threshold change value of a second beam; and

receiving a fourth message from the second access network device, where the fourth message indicates that the second access network device succeeds in configuration and/or that the second access network device fails in configuration.

For specific implementations of the third message, the fourth message, and the like, refer to the corresponding descriptions in the second aspect. Details are not described herein again.

In a possible implementation, when the one or more processors execute the computer program, the access network device performs the following operations:

sending a fifth message to a terminal device, where the fifth message includes conditional event configuration information for triggering, by the terminal device, access to a first access network device, and the conditional event configuration information indicates a conditional event for triggering, by the terminal device, conditional handover for a first beam and a second beam.

For specific implementations of the fifth message and the conditional event configuration information, refer to the corresponding descriptions in the second aspect. Details are not described herein again.

In a possible implementation, when the one or more processors execute the computer program, the access network device performs the following operations:

receiving a first message from a second access network device, where the first message indicates the first access network device to configure a handover trigger threshold change value of a first beam and/or a probability of handing over a terminal device to the first beam; and

sending a second message to the second access network device, where the second message indicates that the first access network device succeeds in configuration and/or that the first access network device fails in configuration.

For specific implementations of the first message, the handover trigger threshold change value of the first beam, the probability of handing over the terminal device to the first beam, the second message, and the like, refer to the corresponding descriptions in the fourth aspect. Details are not described herein again.

In a possible implementation, when the one or more processors execute the computer program, the access network device performs the following operations:

receiving a third message from a first access network device, where the third message indicates the second access network device to configure a handover trigger threshold change value of a second beam; and

sending a fourth message to the first access network device, where the fourth message indicates that the second access network device succeeds in configuration and/or that the second access network device fails in configuration.

For specific implementations of the third message, the fourth message, and the like, refer to the corresponding descriptions in the fifth aspect. Details are not described herein again.

According to a fourteenth aspect, this application provides a terminal device. The terminal device includes one or more processors and a memory. The memory is coupled to the one or more processors, and the memory stores a computer program. When the one or more processors execute the computer program, the terminal device performs the following operations:

receiving a fifth message from a second access network device, where the fifth message includes conditional event configuration information for triggering, by the terminal device, access to a first access network device, and the conditional event configuration information indicates a conditional event for triggering, by the terminal device, conditional handover for a first beam and a second beam.

For specific implementations of the fifth message and the conditional event configuration information, refer to the corresponding descriptions in the sixth aspect. Details are not described herein again.

According to a fifteenth aspect, an embodiment of this application provides a communication system. The communication system includes one or more of the information configuration apparatuses provided in the seventh aspect to the twelfth aspect. Alternatively, the communication system includes one or more of the access network device provided in the thirteenth aspect and the terminal device provided in the fourteenth aspect.

According to a sixteenth aspect, an embodiment of this application provides a computer-readable storage medium. The computer-readable storage medium stores a computer program, and the computer program is executed by a processor to implement the method according to any one of the first aspect to the sixth aspect and the possible implementations of the first aspect to the sixth aspect.

According to a seventeenth aspect, an embodiment of this application provides a chip system. The chip system includes a processor and may further include a memory, and is configured to implement the method according to any one of the first aspect to the sixth aspect and the possible implementations of the first aspect to the sixth aspect. The chip system may include a chip, or may include a chip and another discrete device.

According to an eighteenth aspect, an embodiment of this application provides a computer program product. The computer program product includes instructions. When the instructions are run on a computer, the computer is enabled to perform the method according to any one of the first aspect to the sixth aspect and the possible implementations of the first aspect to the sixth aspect.

## BRIEF DESCRIPTION OF DRAWINGS

FIG. 1 is a diagram of a communication system according to this application;
FIG. 2 is a diagram of an access network device according to this application;
FIG. 3a is a diagram of an MSC operation procedure;
FIG. 3b is a diagram of another MSC operation procedure;
FIG. 4a is a diagram of a handover procedure;
FIG. 4b is a diagram of a conditional handover procedure;
FIG. 5 is a schematic flowchart of an information configuration method according to this application;
FIG. 6 is a schematic flowchart of another information configuration method according to this application;
FIG. 7 is a diagram of a device according to this application; and
FIG. 8 is a diagram of an apparatus according to this application.

## DESCRIPTION OF EMBODIMENTS

A wireless communication system includes communication devices, and wireless communication may be performed between the communication devices by using an air interface resource. The communication devices may include a network device and a terminal device, and the network device may also be referred to as a network side device. The air interface resource may include at least one of a time domain resource, a frequency domain resource, a code resource, and a spatial resource. In this application, "at least one" may also be described as "one or more", and "a plurality of" may be two, three, four, or more. This is not limited in this application.

In this application, "/" may represent an "or" relationship between associated objects. For example, A/B may represent A or B. "and/or" may be used to describe three relationships between associated objects. For example, A and/or B may represent the following three cases: Only A exists, both A and B exist, and only B exists, where A and B may be singular or plural. For ease of describing the technical solutions of this application, in this application, words such as "first" and "second" may be used to distinguish between technical features with same or similar functions. The words such as "first" and "second" do not limit a number and an execution sequence, and the words such as "first" and "second" do not limit a definite difference. In this application, the words "an example" or "for example" are used to represent an example or a description, and any embodiment or design solution described as "an example" or "for example" should not be explained as being more preferred or having more advantages than another embodiment or design solution. The words such as "an example" or "for example" are used to present a related concept in a specific manner for ease of understanding.

The following describes technical solutions of this application with reference to accompanying drawings of this application.

In a mobile communication system, user equipment handover can be implemented in both a handover (handover, HO) procedure and a conditional handover (conditional handover, CHO) procedure. Current HO/CHO is cell-level handover. As an access capability of an access network device is enhanced, for example, a multiple-input multiple-output (multiple-input multiple-output, MIMO) technology is used to implement multi-user access through a plurality of beams, HO/CHO may be beam-level handover. Therefore, how to implement beam-level handover becomes a problem of concern.

This application provides an information configuration method and apparatus, and a related device. Beam-level HO/CHO can be implemented in the information configuration method. The beam-level HO/CHO is more accurate than cell-level HO/CHO. In addition, beam handover conditions may be set for different beams, to facilitate beam-level load balancing.

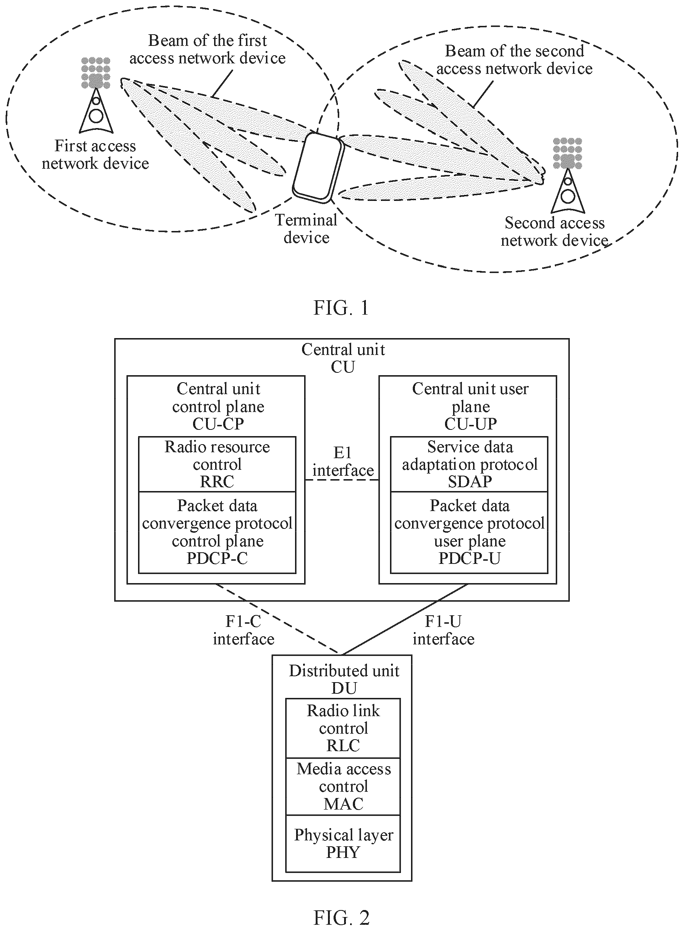

The information configuration method provided in this application may be applied to a communication system shown in FIG. 1. The communication system includes an access network device and a terminal device. For example, the communication system includes two access network devices (a first access network device and a second access network device) and a terminal device. It may be understood that the communication system is merely an example. The communication system may alternatively include more access network devices and terminal devices. This is not limited in this embodiment.

The terminal device is also referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

The access network device is a radio access network (radio access network, RAN) node (or device) that enables the terminal device to access a wireless network. The access network device may also be referred to as a base station. Currently, some examples of the access network device are a next-generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (such as a home evolved NodeB or a home NodeB, HNB), a baseband unit (base band unit, BBU), and a wireless fidelity (wireless fidelity, WiFi) access point (access point, AP).

In an implementation, the access network device may be a RAN device including a central unit (central unit, CU) node, a distributed unit (distributed unit, DU) node, or a CU node and a DU node. Specifically, original functions of the access network device are divided. Some functions of the access network device are deployed on a CU, and remaining functions are deployed on a DU. A plurality of DUs may share one CU, so that costs can be reduced and network expansion can be prone to implement. Division may be performed for the CU and the DU based on a protocol stack. For example, in an access network device shown in FIG. 2, a radio resource control (radio Resource Control, RRC) layer, a packet data convergence protocol (packet data convergence protocol, PDCP) layer, and a service data adaptation protocol (service data adaptation protocol, SDAP) layer in a protocol stack are deployed on a CU. A radio link control (radio link control, RLC) layer, a media access control (media access control, MAC) layer, and a physical layer (physical layer, PHY) in the protocol stack are deployed on a DU. Therefore, the CU has RRC, PDCP, and SDAP processing capabilities, and the DU has RLC, MAC, and PHY processing capabilities. It may be understood that the foregoing function division is merely an example, and constitutes no limitation on the CU and the DU. In other words, there may be another function division manner for the CU and the DU. Details are not described herein. The CU is connected to the DU through an F1 interface. The CU is connected to a core network through an NG interface on behalf of a gNB, and the CU is connected to another gNB through an Xn interface on behalf of the gNB. The CU may be further connected to another eNB through an X2 interface on behalf of the gNB, to perform a dual connectivity operation. Further, functions of the CU may be implemented by one entity or may be implemented by different entities. For example, the central unit CU may be further divided into a control plane (CU-CP) and a user plane (CU-UP). The CU-CP and the CU-UP may be implemented by different functional entities. The CU-CP and the CU-UP may be coupled to the DU to jointly complete functions of a base station. In a possible implementation, the CU-CP is responsible for a control plane function, and mainly includes RRC and a PDCP (PDCP-C) corresponding to the control plane. The PDCP-C is mainly responsible for data encryption and decryption, integrity protection, data transmission, and the like on the control plane. The CU-UP is responsible for a user plane function, and mainly includes an SDAP and a PDCP (PDCP-U) corresponding to the user plane. The SDAP is mainly responsible for processing data of the core network and mapping a data flow (flow) to a bearer. The PDCP-U is responsible for data encryption and decryption, integrity protection, header compression, sequence number maintenance, data transmission, and the like on the user plane. The CU-CP is connected to the CU-UP through an E1 interface. The CU-CP is connected to the core network through the NG interface on behalf of the gNB, and is connected to the DU through an F1-C (control plane). The CU-UP is connected to the DU through an F1-U (user plane). Certainly, in another possible implementation, the PDCP-C is alternatively in the CU-UP.

For ease of understanding, the following describes related terms and concepts in this application.

1. Mobility setting change (mobility setting change, MSC):

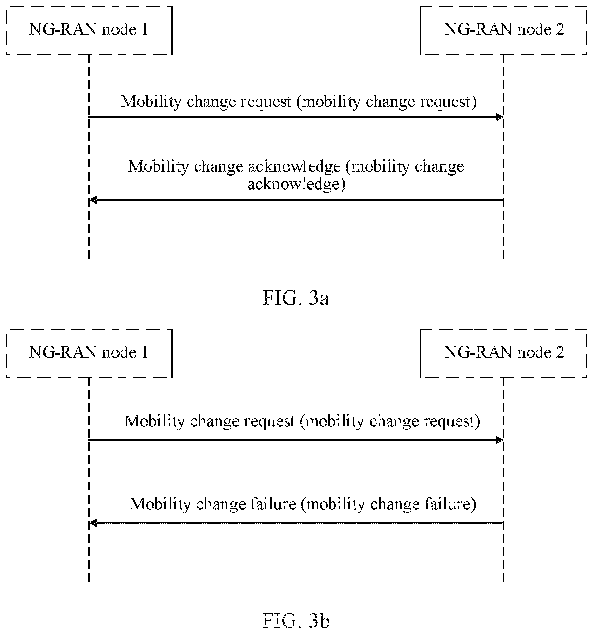

FIG. 3a shows an MSC operation process in a current standard protocol. In this MSC operation process, an NG-RAN node (node) is enabled to negotiate with a peer NG-RAN node about a handover trigger setting. Specifically, an NG-RAN node 1 sends a mobility change request (mobility change request) message to an NG-RAN node 2, to initiate an MSC procedure. After receiving the mobility change request message, the NG-RAN node 2 evaluates whether a proposed handover trigger modification setting of the NG-RAN node 2 in the mobility change request message can be accepted. If the NG-RAN node 2 can successfully complete a mobility change request, the NG-RAN node 2 sends a mobility change acknowledge (mobility change acknowledge) message to the NG-RAN node 1. It may be understood that non-UE-associated signaling is used in the MSC operation process. Optionally, if the proposed handover trigger modification setting of the NG-RAN node 2 in the mobility change request message is rejected by the NG-RAN node 2, or the NG-RAN node 2 cannot complete a mobility setting change process, the NG-RAN node 2 sends a mobility change failure (mobility change failure) message to the NG-RAN node 1, as shown in FIG. 3b. For example, the NG-RAN node 2 may use the mobility change failure message to carry a mobility parameters modification range.

Specifically, the mobility change request message includes the following cell-level information: an NG-RAN node 1 cell identity (NG-RAN node 1 cell ID), an NG-RAN node 2 cell identity (NG-RAN node 2 cell ID), NG-RAN node 1 mobility parameters (NG-RAN node 1 mobility parameters) information, NG-RAN node 2 proposed mobility parameters (NG-RAN node 2 mobility parameters) information, cause (cause) information, and the like. For example, Table 1 shows information elements (information element, IE) included in a cell-level mobility change request message in an existing standard protocol (38.423) and related information.

**Table 1: Information elements included in a cell-level mobility change request** message **and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | Mandatory M | | 9.2.3.1 | | Yes Yes | Reject Reject |
| NG-RAN node 1 cell identity NG-RAN node 1 cell ID | M | | Global NG-RAN cell identity Global NG-RAN cell identity 9.2.2.27 | | Yes | Reject |
| NG-RAN node 2 cell identity NG-RAN node 2 cell ID | M | | Global NG-RAN cell identity 9.2.2.27 | | Yes | Reject |
| NG-RAN node 1 mobility parameters NG-RAN node 1 mobility parameters | Optional O | | Mobility parameters information 9.2.2.60 | Configuration change in NG-RAN node 1 cell | Yes | Ignore Ignore |
| NG-RAN node 2 proposed mobility parameters NG-RAN node 2 mobility parameters | M | | Mobility parameters information 9.2.2.60 | Proposed configuration change in NG-RAN node 2 cell | Yes | Reject |
| Cause information | M | | 9.2.3.2 | | Yes | Reject |

(continued)

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Cause | | | | | | |

The NG-RAN node 1 mobility parameters (NG-RAN node 1 mobility parameters) information is defined as a configuration change in an NG-RAN node 1 cell (configuration change in NG-RAN node 1 cell), and a type is mobility parameters information (mobility parameters information). The NG-RAN node 1 mobility parameters information includes a handover trigger threshold change value of the NG-RAN node 1. For example, Table 2 shows cell-level mobility parameters information. The cell-level mobility parameters information includes a handover trigger change (handover trigger change) information element.

**Table 2: Cell-level mobility parameters information.**

| Information element name IE/Group name | Presence Presence | Range Range | Information element type and reference IE type and reference | Semantics description Semantics description |
|---|---|---|---|---|
| Handover trigger change handover trigger change | M | | Integer INTEGER (-20, ..., 20) | The actual value is IE value * 0.5 (unit: decibel dB) |

Similarly, the NG-RAN node 2 proposed mobility parameters (NG-RAN node 2 proposed mobility parameters) information is defined as a proposed configuration change in an NG-RAN node 2 cell (proposed configuration change in NG-RAN node 2 cell), and a type is also mobility parameters information (mobility parameters information). The NG-RAN node 2 proposed mobility parameters information includes a proposed handover trigger threshold change value of the NG-RAN node 2. For the mobility parameters information, refer to the descriptions in Table 2. Details are not described herein again.

The cause information indicates a reason for sending the mobility change request message. For example, the reason for sending the mobility change request message is that load needs to be reduced in a serving cell (reduce load in serving cell), or that resource optimization (resource optimization) needs to be performed.

Specifically, the mobility change acknowledge message indicates that the mobility parameters (NG-RAN node 2 proposed mobility parameters) information proposed by the NG-RAN node 1 is accepted by the NG-RAN node 2. The mobility change acknowledge message includes the following cell-level information: the NG-RAN node 1 cell identity (NG-RAN node 1 cell ID), the NG-RAN node 2 cell identity (NG-RAN node 2 cell ID), criticality diagnostics (criticality diagnostics) information, and the like. For example, Table 3 shows information elements included in a cell-level mobility change acknowledge message in the existing standard protocol (38.423) and related information.

**Table 3: Information elements included in a cell-level mobility change acknowledge message and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | M | | 9.2.3.1 | | Yes | Reject |
| NG-RAN node 1 cell identity NG-RAN node 1 cell ID | M | | Global NG-RAN cell identity 9.2.2.27 | | Yes | Reject |

(continued)

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| NG-RAN node 2 cell identity NG-RAN node 2 cell ID | M | | Global NG-RAN cell identity 9.2.2.27 | | Yes | Reject |
| Criticality diagnostics information Criticality diagnostics | O | | 9.2.3.2 | | Yes | Ignore |

The criticality diagnostics information indicates that some received messages cannot be parsed, some messages are lost, or some messages include logic errors. For example, the criticality diagnostics information in the mobility change acknowledge message sent by the NG-RAN node 2 to the NG-RAN node 1 may indicate that some messages in the mobility change request message received by the NG-RAN node 2 cannot be parsed, some information in the mobility change request message received by the NG-RAN node 2 is lost, or some messages in the mobility change request message received by the NG-RAN node 2 include logic errors.

Specifically, the mobility change failure message indicates that the mobility parameters (NG-RAN node 2 proposed mobility parameters) proposed by the NG-RAN node 1 is rejected by the NG-RAN node 2. The mobility change failure message includes the following cell-level information: the NG-RAN node 1 cell identity (NG-RAN node 1 cell ID), the NG-RAN node 2 cell identity (NG-RAN node 2 cell ID), cause (cause) information, the mobility parameters modification range (mobility parameters modification range), criticality diagnostics (criticality diagnostics) information, and the like. For example, Table 4 shows information elements included in a cell-level mobility change failure message in the existing standard protocol (38.423) and related information.

**Table 4: Information elements included in a cell-level mobility change failure message and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | M | | 9.2.3.1 | | Yes | Reject |
| NG-RAN node 1 cell identity NG-RAN node 1 cell ID | M | | Global NG-RAN cell identity 9.2.2.27 | | Yes | Reject |
| NG-RAN node 2 cell identity NG-RAN node 2 cell ID | M | | Global NG-RAN cell identity 9.2.2.27 | | Yes | Reject |
| Cause information Cause | M | | 9.2.3.2 | | Yes | Reject |
| Mobility parameters modification range | O | | 9.2.2.61 | | Yes | Ignore |

(continued)

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Mobility parameters modification range | | | | | | |
| Criticality diagnostics information Criticality diagnostics | O | | 9.2.3.2 | | Yes | Ignore |

The mobility parameters modification range includes a handover trigger change value range allowed by the NG-RAN node 2 at a sending moment of the mobility change failure message. For example, Table 5 shows cell-level mobility parameters modification range information.

**Table 5: Cell-level mobility parameters modification range information.**

| Information element name IE/Group name | Presence Presence | Range Range | Information element type and reference IE type and reference | Semantics description Semantics description |
|---|---|---|---|---|
| Handover trigger change lower limit Handover trigger change lower limit | M | | INTEGER (-20, ..., 20) | The actual value is IE value * 0.5 (unit: dB) |
| Handover trigger change upper limit Handover trigger change upper limit | M | | INTEGER (-20, ..., 20) | The actual value is IE value * 0.5 (unit: dB) |

2. Handover (HO):

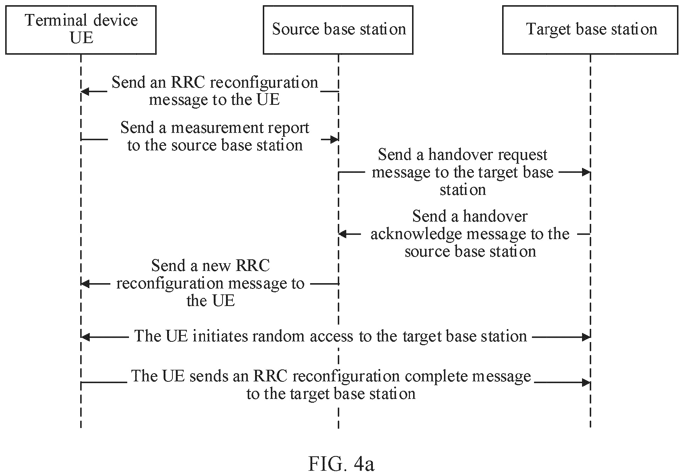

In a handover procedure, an access network device sends a handover message to indicate a cell to which a terminal device is to be handed over and how to perform handover. For example, FIG. 4a is a diagram of a handover procedure. The handover procedure is implemented through interaction between UE, a source base station, and a target base station, and includes the following steps:

Step 1: The source base station sends an RRC reconfiguration message to the UE in a connected state. The RRC reconfiguration message includes a measurement object, a report configuration, a measurement identifier, and the like.

Step 2: The UE measures a series of cells (including, for example, a serving cell and a neighboring cell) based on the RRC reconfiguration message, and generates a measurement report and sends the measurement report to the source base station. The measurement report includes various events, for example, that signal strength of a current serving cell is lower than a threshold and a signal of a target cell is higher than the threshold.

Step 3: The source base station determines, based on the measurement report, whether the UE is to be handed over. If the source base station determines that the UE is to be handed over, the source base station sends a handover request (handover request) message to the target base station.

Step 4: The target base station determines, based on the number of connections of the target base station or the like, whether to allow the UE to access the target base station. If the target base station allows the UE to access the target base station, the target base station sends a handover request acknowledge (handover request acknowledge) message to the source base station. The handover request acknowledge message includes a new cell radio network temporary identifier (cell radio network temporary identifier, C-RNTI), a security-related algorithm of the target base station, and the like.

Step 5: When receiving the handover request acknowledge message, the source base station sends an RRC reconfiguration message (a handover command) to the UE. The RRC reconfiguration message includes the handover acknowledge message described in step 4 (it is equivalent that the source base station implements transparent transmission). Specifically, the handover command in an NR system includes related information of a target cell and related configuration parameters required for the UE to access the target cell. For example, the handover command includes information about the target cell (for example, a physical cell identifier (physical cell identifier, PCI) of the target cell and frequency information corresponding to the target cell (for example, a frequency channel number corresponding to the target cell)), a C-RNTI allocated by the target cell to the UE, and information about a random access channel (random access channel, RACH) resource required for accessing the target cell (for example, a dedicated RACH resource and/or a common RACH resource).

Step 6: The UE initiates random access to the target base station according to the handover command. It should be noted that, in an existing handover procedure, the UE disconnects from the source base station. In other words, before successfully accessing the target base station, the UE may be temporarily interrupted in sending and receiving data.

Step 7: The UE sends an RRC reconfiguration complete message to the target base station.

It can be learned that, after receiving the handover message, the terminal device accesses a target cell based on content included in the handover message. Therefore, successfully sending the handover message is a necessary condition to ensure successful handover in a conventional handover mechanism.

3. Conditional handover (CHO):

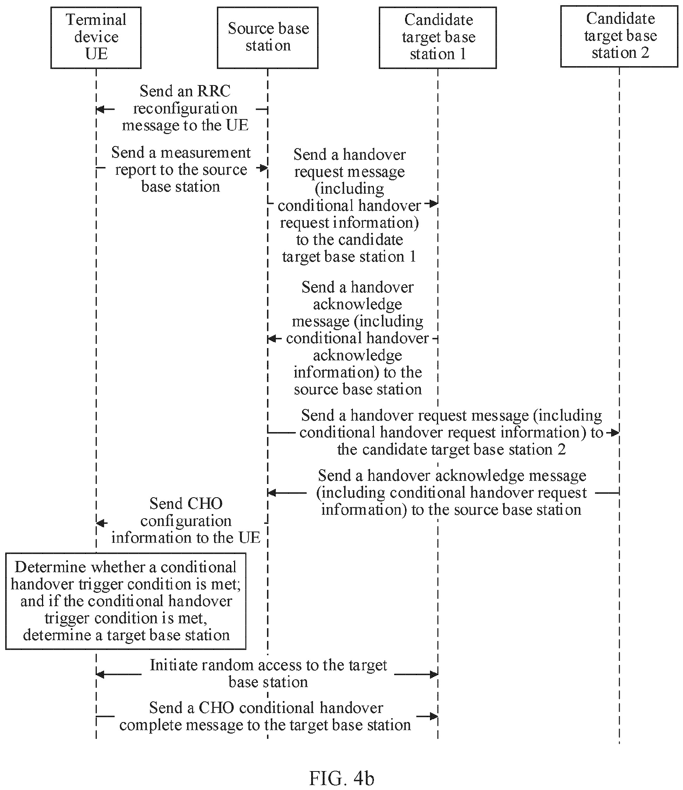

The CHO is used to increase a handover success rate. The CHO means that a source base station sends CHO configuration information to UE when link quality is relatively good, so that the UE performs a conditional handover procedure. For example, FIG. 4b is a diagram of a conditional handover procedure. The handover procedure is implemented through interaction between UE, a source base station, a candidate target base station 1, and a candidate target base station 2, and includes the following steps:

Step 1: The source base station sends an RRC reconfiguration message to the UE in a connected state.

Step 2: The UE measures a series of cells (including, for example, a serving cell and a neighboring cell) based on the RRC reconfiguration message, and generates a measurement report and sends the measurement report to the source base station.

It may be understood that steps 1 and 2 in the CHO procedure are similar to steps 1 and 2 in the HO procedure, and details are not described herein again.

Step 3: The source base station determines, based on the measurement report or an internal implementation, whether conditional handover is to be performed on the UE. If the source base station determines that conditional handover is to be performed on the UE, the source base station sends a handover request (handover request) message to each of one or more candidate target base stations. The handover request message includes conditional handover request (conditional handover information request) information.

Step 4: Each of the one or more candidate target base stations determines, based on the number of connections of the candidate target base station or the like or an internal implementation, whether to allow the UE to access the candidate target base station. If the candidate target base station allows the UE to access the candidate target base station, the candidate target base station sends a handover request acknowledge (handover request acknowledge) message to the source base station. The handover request acknowledge message includes conditional handover acknowledge (conditional handover information acknowledge) information.

Step 5: After the source base station receives the handover request acknowledge message, the source base station may send cell-level CHO configuration information by using an existing RRC message, or may send cell-level CHO configuration information by using a newly defined RRC message. For example, the RRC message may be a conditional RRC reconfiguration message (for example, CondRRCReconfiguration), or may be in another naming/expression form. This is not limited in this application. The cell-level CHO configuration information may include a CHO trigger condition, information about one or more candidate cells, and the like. The information about the candidate cell may include but is not limited to a cell global identity (cell global identifier, CGI) of the candidate cell, a PCI of the candidate cell, frequency information corresponding to the candidate cell, and the like.

Step 6: After receiving the CHO configuration information, the UE determines, based on the CHO configuration information, whether the candidate cell meets a handover trigger condition.

Step 7: If the candidate cell meets the handover trigger condition, the UE uses, as a target cell, the candidate cell that meets the handover trigger condition, and initiates a random access process to the target cell.

Step 8: When random access is successfully completed, the UE sends a CHO conditional handover complete message to a base station (a target base station) to which the target cell belongs, to notify the target base station that conditional handover is completed.

Specifically, the handover request message described in step 3 is sent by the source base station to the target base station, and is used to request the target base station to prepare a resource for handover. For example, the handover request message may include the following cell-level conditional handover request information: a cell-level conditional handover information request and the like. The cell-level conditional handover information request may include but is not limited to conditional handover trigger information, an identifier (target NG-RAN node UE XnAP ID) of the terminal device handed over to the target base station, probability information of handing over the terminal device to the target cell, and the like. For example, Table 6 shows information elements included in a cell-level handover request message and related information.

**Table 6: Information elements included in a cell-level handover request message and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| ... | ... | ... | ... | ... | ... | ... |
| Conditional handover information request | O | | | | Yes | Reject |
| > Conditional handover trigger CHO trigger | M | | ENUMERATED (CHO-initiation, CHO-replace, ...) | | | |
| > Identifier of the terminal device handed over to the target base station Target NG-RAN node UE XnAP ID | | | NG-RAN node UE XnAP ID 9.2.3.16 | Allocated at the target NG-RAN node | | |
| > Probability information of handing over the terminal device to the target cell Estimated arrival probability | O | | INTEGER (1, ..., 100) | | | |
| ... | ... | | ... | | ... | ... |

A probability that the terminal device is handed over to the target cell is determined based on an internal implementation of the source base station, for example, determined based on signal strength of an overlapping part of coverage areas of the source base station and the target base station and with reference to handover trigger threshold information of an MSC.

The handover request acknowledge message described in step 4 is sent by the target base station to the source base station, and is used to notify the source base station of a resource prepared by the target base station for handover. For example, the handover request acknowledge message may include the following cell-level conditional handover acknowledge information: cell-level conditional handover information acknowledge and the like. The cell-level conditional handover information acknowledge may include but is not limited to a requested target base station cell identity (requested target cell ID), information about the maximum number of conditional handover preparations (maximum number of CHO preparations), and the like. For example, Table 7 shows information elements included in a cell-level handover request acknowledge message and related information.

**Table 7: Information elements included in a cell-level handover request acknowledge message and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| ... | ... | ... | ... | ... | ... | ... |
| Conditional handover information acknowledge | O | | | | Yes | Reject |
| > Requested target base station cell identity Requested target cell ID | M | | Target cell global ID 9.2.3.25 | Target cell indicated in the corresponding HANDOVER REQUEST message | | |
| > Information about the maximum number of conditional handover preparations Maximum number of CHO preparations | O | | 9.2.3.101 | | | |
| ... | ... | | ... | | ... | ... |

The information about the maximum number of conditional handover preparations indicates the maximum number of candidate cells for conditional handover in the target base station. For example, Table 8 shows information about the maximum number of conditional handover preparations.

**Table 8: Cell-level mobility parameters modification range information.**

| Information element name IE/Group name | Presence Presence | Range Range | Information element type and reference IE type and reference | Semantics description Semantics description |
|---|---|---|---|---|
| Information about the maximum number of conditional handover preparations Maximum number of CHO preparations | M | | INTEGER (1, ..., 8, ...) | |

In steps 5 to 8, the CHO configuration information includes a conditional event A3 (condEventA3) and a conditional event A5 (condEventA5) that correspond to MeasID. When the UE meets a related event, CHO is triggered. For example, the conditional event A3 includes: when a condition A3-1 shown in Formula (1) is met, it is considered that the UE meets an entering condition of the conditional event A3:

$$Mn + Ofn + Ocn - Hys > Mp + Ofp + Ocp + Off \quad (1);$$

or
when a condition A3-2 shown in Formula (2) is met, it is considered that the UE meets a leaving condition of the conditional event A3:

$$Mn + Ofn + Ocn + Hys < Mp + Ofp + Ocp + Off \quad (2).$$

*Mn* represents a measurement result of the neighboring cell, and no offset is considered. *Ofn* represents an individual offset of a measurement object of a reference signal of the neighboring cell, for example, offsetMO that corresponds to the neighboring cell and that is defined in measObjectNR, where offsetMO includes an individual offset of a synchronization signal block (synchronization signal block, SSB) and/or an individual offset of a channel state information-reference signal (channel state information-reference signal, CSI-RS) of the reference signal of the neighboring cell, such as rsrpOffsetSSB, rsrqOffsetSSB, sinrOffsetSSB, rsrpOffsetCSI-RS, rsrqOffsetCSI-RS, and sinrOffsetCSI-RS. *Ocn* represents a cell individual offset of the neighboring cell, for example, cell Individual Offset that corresponds to a frequency channel number of the neighboring cell and that is defined in measObjectNR. If no cell individual offset is configured for the neighboring cell, the cell individual offset of the neighboring cell is set to 0 by default. cell Individual Offset is a cell individual offset that is of the neighboring cell and that is superimposed on the SSB and/or the CSI-RS, such as rsrpOffsetSSB, rsrqOffsetSSB, sinrOffsetSSB, rsrpOffsetCSI-RS, rsrqOffsetCSI-RS, and sinrOffsetCSI-RS. *Mp* represents a measurement result of a primary cell, and no offset is considered. *Ofp* represents an individual offset of a measurement object of the primary cell, for example, offsetMO that corresponds to the primary cell and that is defined in measObjectNR. *Ocp* represents a cell individual offset of the primary cell, for example, cellIndividualOffset that corresponds to the primary cell and that is defined in measObjectNR. In addition, if no cell individual offset is configured for the primary cell, the cell individual offset of the primary cell is set to 0 by default. *Hys* represents a hysteresis parameter of the conditional event A3, for example, hysteresis that is of the conditional event A3 and that is defined in reportConfigNR, where hysteresis is an integer whose value is 0 to 30. *Off* represents an offset parameter of the conditional event A3, for example, a3-Offset that is of the conditional event A3 and that is defined in reportConfigNR. a3-Offset includes rsrp (an integer whose value is -30 to 30), rsrq (an integer whose value is -30 to 30), and sinr (an integer whose value is -30 to 30). It should be noted that when *Mn* and *Mp* represent reference signal received power (reference signal receiving power, RSRP), units of *Mn* and *Mp* are decibel-milliwatts dBm; or when *Mn* and *Mp* represent reference signal received quality (reference signal receiving quality, RSRQ) or reference signal-signal to interference plus noise ratios (reference signal signal to interference noise ratio, RS-SINR), units of *Mn* and *Mp* are dB. Units of *Off, Ocn, Off, Ocp, Hys,* and *Off* are dB.

For another example, the conditional event A5 includes: when both a condition A5-1 shown in Formula (3) and a condition A5-2 shown in Formula (4) are met, it is considered that the UE meets an entering condition of the conditional event A5:

$$Mp + Hys < Thresh1 \qquad (3);$$

and

$$Mn + Ofn + Ocn - Hys > Thresh2 \qquad (4);$$

or

when a condition A5-3 shown in Formula (5) and/or a condition A5-4 shown in Formula (6) are/is met, it is considered that the UE meets a leaving condition of the conditional event A5:

$$Mp - Hys > Thresh1 \qquad (5);$$

and

$$Mn + Ofn + Ocn + Hys < Thresh2 \qquad (6).$$

For descriptions of *Mp, Mn, Ofn, Ocn,* and *Hys* , refer to the corresponding descriptions in the conditional event A3. Details are not described herein again. *Thresh1* represents a threshold parameter of the conditional event A5, for example, a5-Threshold1 defined in reportConfigNR for the conditional event A5. *Thresh2* represents another threshold parameter of the conditional event A5, for example, a5-Threshold2 defined in reportConfigNR for the conditional event A5. It should be noted that units of *Thresh1* and *Thresh2* are the same as those of *Mp* and *Mn.*

The following describes in detail the information configuration method provided in this application.

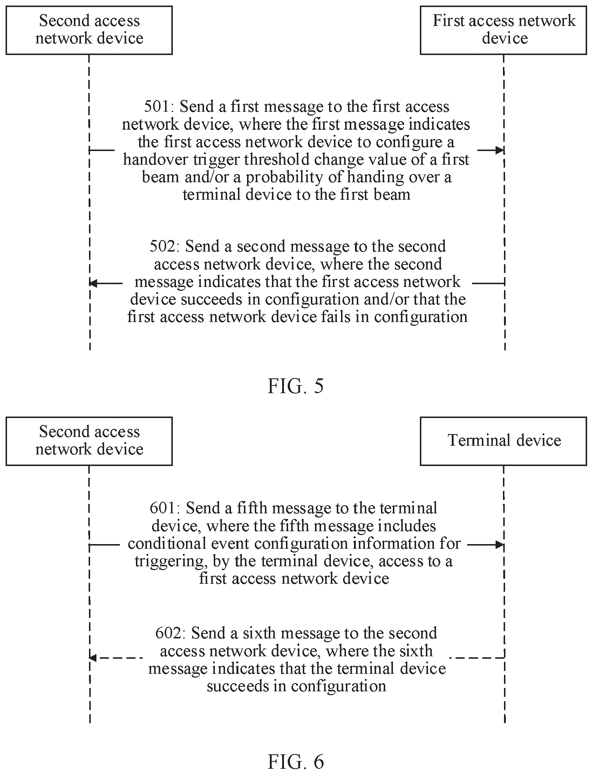

FIG. 5 is a schematic flowchart of an information configuration method according to this application. The information configuration method is applied to the communication system shown in FIG. 1. For example, the information configuration method may be implemented through interaction between a first access network device and a second access network device, and includes the following steps.

501: The second access network device sends a first message to the first access network device, where the first message indicates the first access network device to configure a handover trigger threshold change value of a first beam and/or a probability of handing over a terminal device to the first beam.

Example 1: When the first message indicates the first access network device to configure the handover trigger threshold change value of the first beam, the first message may be a mobility change request message in an MSC procedure.

Compared with cell-level handover trigger threshold configuration information included in a current mobility change request message, the first message in this application further includes beam-level handover trigger threshold configuration information. In this application, the first beam is a beam of the first access network device, and a second beam is a beam of the second access network device. It should be noted that the first beam in this application may be one beam, or may be a plurality of beams. The second beam may be one beam, or may be a plurality of beams.

Specifically, the first message includes handover trigger configuration information of the first beam. The handover trigger configuration information of the first beam includes beam indication information of the first beam and/or proposed mobility parameters information of the first beam. The beam indication information of the first beam indicates a specified beam of the first access network device, or associates a specified beam of the first access network device. For example, the beam indication information of the first beam may be a beam identifier (beam ID), and each beam identifier indicates one specified beam of the first access network device. It should be noted that when the first beam includes a plurality of beams, the beam indication information of the first beam includes respective indication information of the plurality of beams. The proposed mobility parameters information of the first beam includes a proposed handover trigger threshold change value of the first beam and/or a proposed handover trigger threshold of the first beam. The proposed handover trigger threshold of the first beam is equal to an original handover trigger threshold of the first beam plus the proposed handover trigger threshold change value of the first beam. The proposed handover trigger threshold change value of the first beam and/or the proposed handover trigger threshold of the first beam may be determined by the second access network device based on a load status of the beam of the first access network device and a load status of the beam of the second access network device. For example, when load of the beam of the second access network device is relatively heavy and load of the beam of the first access network device is relatively light, the proposed handover trigger threshold change value that is of the first beam and that is configured by the second access network device is a negative value. In this case, after the proposed handover trigger threshold change value of the first beam is added to the original handover trigger threshold of the first beam, the handover trigger threshold of the first beam decreases, in other words, the handover trigger threshold of the first beam is reduced, so that it is more prone to trigger a handover preparation procedure (handover preparation procedure), to be specific, it is more prone to enable the terminal device to be handed over to the first beam of the first access network device, thereby reducing the load of the beam of the second access network device. For the entire communication system, this facilitates beam load balancing. The load status of the beam of the first access network device, the load status of the beam of the second access network device, and the like may be exchanged between the first access network device and the second access network device by using another procedure, so that the first access network device and the second access network device each can obtain related information of a peer end.

Further, the first message further includes handover trigger configuration information of the second beam. The handover trigger configuration information of the second beam includes beam indication information of the second beam and/or mobility parameters information of the second beam. The beam indication information of the second beam indicates a specified beam of the second access network device, or associates a specified beam of the second access network device. For example, the beam indication information of the second beam may also be a beam identifier (beam ID), and each beam identifier indicates one specified beam of the second access network device. It should be noted that when the second beam includes a plurality of beams, the beam indication information of the second beam includes respective indication information of the plurality of beams. The mobility parameters information of the second beam includes a handover trigger threshold change value of the second beam and/or a handover trigger threshold of the second beam. The handover trigger threshold of the second beam is equal to an original handover trigger threshold of the second beam plus the handover trigger threshold change value of the second beam. The handover trigger threshold change value of the second beam and/or the handover trigger threshold of the second beam may be determined by the second access network device based on the load status of the beam of the second access network device. For example, when the load of the beam of the second access network device is relatively heavy, the second access network device configures the handover trigger threshold change value of the second beam as a positive value. In this case, after the handover trigger threshold change value of the second beam is added to the original handover trigger threshold of the second beam, the handover trigger threshold of the second beam increases, in other words, the handover trigger threshold of the second beam is increased, so that it is more difficult to trigger a handover preparation procedure, to be specific, it is more difficult to enable the terminal device to be handed over to the second beam of the second access network device, thereby avoiding further increasing the load of the beam of the second access network device.

It may be understood that the handover trigger configuration information of the first beam and/or the handover trigger configuration information of the second beam that are/is described in the example 1 may be used for both common handover (HO) and conditional handover (CHO). A difference lies in that for HO, an access network device determines and triggers handover, and for CHO, a terminal device determines and triggers handover. Therefore, related information (for example, the beam-level handover trigger threshold configuration information) in the MSC procedure may be used for both HO and CHO.

Optionally, the first message further includes cause information of sending the first message. The cause information of the first message indicates a handover trigger configuration cause of the first beam and/or a handover trigger configuration cause of the second beam. For example, the cause information of the first message may include mobility change request cause information of the first beam and/or mobility change request cause information of the second beam. A reason for sending the first message may be that the load of the first beam and/or the load of the second beam need/needs to be reduced, or that resource optimization needs to be performed.

For example, Table 9 shows information elements included in a beam-level mobility change request message and related information.

**Table 9: Information elements included in a beam-level mobility change request message and related information.**

| Information element name IE/ Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | M | | 9.2.3.1 | | Yes | Reject |
| NG-RAN node 1 cell identity NG-RAN node 1 cell ID | M | | Global NG-RAN cell identity Global NG-RAN cell identity 9.2.2.27 | | Yes | Reject |
| NG-RAN node 2 cell identity NG-RAN node 2 cell ID | M | | Global NG-RAN cell identity 9.2.2.27 | | Yes | Reject |
| Beam indication information of the first beam | O | | | | Yes | Ignore |
| > Proposed mobility parameters of the first beam | M | | Mobility parameters information 9.2.2.60 | Proposed configuration change in NG-RAN node 1 cell | - | |
| > Handover trigger configuration cause of the first beam | M | | 9.2.3.2 | | - | |
| Beam indication information of the second beam | O | | | | Yes | Ignore |
| > Mobility parameters of the second beam | M | | Mobility parameters information 9.2.2.60 | Configuration change in NG-RAN node 2 cell | - | |
| > Handover trigger configuration cause of the second beam | M | | 9.2.3.2 | | - | |

It can be learned that, compared with Table 1, the beam-level mobility change request message includes beam-level handover trigger configuration information, to facilitate beam-level handover. It should be noted that Table 9 is merely an example. In this application, there is no limitation that the beam-level handover trigger configuration information is carried only in the mobility change request message. For example, the beam-level handover trigger configuration information may alternatively be carried in another message. Information elements included in the another message and related information are similar to those in Table 9. This is not specifically limited herein. In addition, the first message in this application may also include the cell-level handover trigger configuration information shown in Table 1. In this case, the first message may indicate both the cell-level handover trigger configuration information and the beam-level handover trigger configuration information. It should be noted that, values of the information element name, presence, range, information element type and reference, semantics description, criticality, assigned criticality, and the like are not limited in Table 9. For example, a value of presence of the proposed mobility parameters of the first beam may be mandatory, may be optional, or may be undefined. This is not limited in this application.

Example 2: When the first message indicates the probability of handing over the terminal device to the first beam, the first message may be a handover request message in a CHO procedure.

Compared with cell-level conditional handover request information included in a current handover request message, the first message in this application further includes beam-level conditional handover request information. Specifically, the first message includes conditional handover request information of the first beam. The conditional handover request information of the first beam includes beam indication information of the first beam and/or estimated arrival probability information of the first beam. For the beam indication information of the first beam, refer to the corresponding descriptions in the previous example. Details are not described herein again. The estimated arrival probability information of the first beam indicates the probability of handing over the terminal device to the first beam. The probability of handing over the terminal device to the first beam is determined by the second access network device based on a beam distribution status of an overlapping area and threshold-related information exchanged through an MSC. Specifically, the second access network device determines, based on beam distribution information of the first access network device at a cell edge and/or beam distribution information of the second access network device at a cell edge and handover-trigger-threshold-related information of the first beam and/or handover-trigger-threshold-related information of the second beam that are/is exchanged through the MSC, the probability of handing over the terminal device to the first beam. For example, when the second access network device determines that a handover trigger threshold of the first beam is relatively high, it indicates that it is difficult to hand over the terminal device to the beam, in other words, the probability of handing over the terminal device to the first beam is relatively low. When the second access network device determines that a handover trigger threshold of the first beam is relatively low, it indicates that it is prone to hand over the terminal device to the beam, in other words, the probability of handing over the terminal device to the first beam is relatively high. It may be understood that the first beam may be a plurality of beams. In this case, the estimated arrival probability information of the first beam includes a probability of handing over the terminal device to each beam of the first access network device. The overlapping area is an overlapping part of a coverage area of the first access network device and a coverage area of the second access network device. When the terminal device is moved to the overlapping area, the terminal device may be handed over from a current serving cell to another cell.

For example, Table 10 shows information elements included in a beam-level handover request message provided in this application and related conditional handover request information.

**Table 10: Information elements included in a beam-level handover request message and related conditional handover request information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| ... | ... | | ... | ... | ... | ... |
| Conditional handover information request | O | | | | Yes | Reject |
| > Conditional handover trigger CHO trigger | M | | ENUMERATED (CHO-initiation, CHO-replace, ...) | | | |

(continued)

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| > Identifier of the terminal device handed over to a target base station Target NG-RAN node UE XnAP ID | | | NG-RAN node UE XnAP ID 9.2.3.16 | Allocated at the target NG-RAN node | | |
| > Beam indication information of the target base station | | | | | | |
| » Probability information of handing over the terminal device to a target cell Estimated arrival probability | O | | INTEGER (1, ..., 100) | | | |
| ... | ... | | ... | | ... | ... |

It can be learned that, compared with Table 6, the beam-level handover request message includes probability information of handing over the UE to each beam, so that the target base station can prepare a beam-level resource. For example, if a probability that the UE is handed over to a beam is high, the target base station may allocate a suitable user of the beam to another beam in advance. In this way, the beam reserves more resources to prepare for the UE to be handed over to the beam. Finally, this achieves more balanced beam load, thereby improving system performance. It should be noted that Table 10 is merely an example. In this application, there is no limitation that the beam-level conditional handover request information is carried only in the handover request message. For example, the beam-level conditional handover request information may alternatively be carried in another message. Information elements included in the another message and related information are similar to those in Table 10. This is not specifically limited herein. In addition, the first message in this application may also include the cell-level conditional handover request information shown in Table 6. In this case, the first message may indicate both the cell-level conditional handover request information and the beam-level conditional handover request information. It should be further noted that, in this example, the first access network device is the target base station and the second access network device is a source base station. It should be further noted that, values of the information element name, presence, range, information element type and reference, semantics description, criticality, assigned criticality, and the like are also not limited in Table 10. For example, a value of presence of the probability information of handing over the terminal device to the target cell may be mandatory, may be optional, or may be undefined. This is not limited in this application.

Example 3: When the first message indicates the first access network device to configure the handover trigger threshold change value of the first beam and the probability of handing over the terminal device to the first beam, the first message may implement the two configurations described in the foregoing example 1 and example 2. To be specific, in the example 3, when the second access network device sends the first message to the first access network device, the first access network device may perform beam-level handover trigger threshold configuration and beam-level conditional handover request configuration. For a specific implementation, refer to the descriptions of the beam-level handover trigger threshold configuration and the beam-level conditional handover request configuration in the foregoing example 1 and example 2. Details are not described herein again.

502: The first access network device sends a second message to the second access network device, where the second message indicates that the first access network device succeeds in configuration and/or that the first access network device fails in configuration.

That the first access network device succeeds in configuration indicates that the first access network device successfully configures, based on the first message, beam-level information carried in the first message. For example, the first access network device successfully configures the proposed mobility parameters information of the first beam. That the first access network device fails in configuration indicates that the first access network device rejects the beam-level information carried in the first message. For example, after receiving the first message, the first access network device obtains the beam-level information carried in the first message. It is assumed that the proposed mobility parameters information that is of the first beam and that is carried in the first message does not meet a configuration requirement of the first access network device. In this case, the first access network device may reject the beam-level information carried in the first message, in other words, the first access network device fails in configuration.

Example 4: When the second message indicates that the first access network device succeeds in configuration, the second message may be a mobility change acknowledge message in the MSC procedure.

Compared with cell-level configuration acknowledge information included in a current mobility change acknowledge message, the second message in this application further includes beam-level configuration acknowledge information. Specifically, the second message includes one or more of the following: the beam indication information of the first beam, mobility change acknowledge criticality diagnostics information of the first beam, the beam indication information of the second beam, and mobility change acknowledge criticality diagnostics information of the second beam.

For the beam indication information of the first beam and the beam indication information of the second beam, refer to the corresponding descriptions in the foregoing example 1. Details are not described herein again. It may be understood that in the example 4, the first beam may be specifically a beam successfully configured in the first access network device, and the second beam may be specifically a beam successfully configured in the second access network device. The mobility change acknowledge criticality diagnostics information of the first beam indicates that partial information of the first beam in the first message is incorrect. That partial information of the first beam in the first message is incorrect may include but is not limited to the following several cases: After receiving the first message, the first access network device parses the first message, and finds that partial information of the first beam in the first message cannot be parsed, finds that partial information of the first beam in the first message is lost, or finds that partial information of the first beam in the first message includes a logic error. To be specific, if the first access network device finds, after parsing the first message, that the first message has the foregoing information error, the second message sent by the first access network device to the second access network device carries a part or all of the mobility change acknowledge criticality diagnostics information of the first beam. Otherwise, the second message does not carry the mobility change acknowledge criticality diagnostics information of the first beam. The mobility change acknowledge criticality diagnostics information of the second beam indicates that partial information of the second beam in the first message is incorrect. Similar to that partial information of the first beam in the first message is incorrect, that partial information of the second beam in the first message is incorrect may also include but is not limited to the following cases: After receiving the first message, the first access network device parses the first message, and finds that partial information of the second beam in the first message cannot be parsed, finds that partial information of the second beam in the first message is lost, or finds that partial information of the second beam in the first message includes a logic error. To be specific, if the first access network device finds, after parsing the first message, that the first message has the foregoing information error, the second message sent by the first access network device to the second access network device carries a part or all of the mobility change acknowledge criticality diagnostics information of the second beam. Otherwise, the second message does not carry the mobility change acknowledge criticality diagnostics information of the second beam.

For example, Table 11 shows information elements included in a beam-level mobility change acknowledge message provided in this application and related information.

**Table 11: Information elements included in a beam-level mobility change acknowledge message and related information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | M | | 9.2.3.1 | | Yes | Reject |
| NG-RAN node 1 cell identity NG-RAN node 1 cell ID | M | | Global NG-RAN cell identity 9.2.2.27 | | Yes | Reject |
| NG-RAN node 2 cell identity NG-RAN node 2 cell ID | M | | Global NG-RAN cell identity 9.2.2.27 | | Yes | Reject |
| Beam indication information of the first beam | O | | | | Yes | Ignore |

(continued)

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| > Mobility change acknowledge criticality diagnostics information of the first beam Criticality diagnostics | O | | 9.2.3.2 | | | |
| Beam indication information of the second beam | O | | | | Yes | Ignore |
| > Mobility change acknowledge criticality diagnostics information of the second beam Criticality diagnostics | O | | 9.2.3.2 | | | |

It can be learned that, compared with Table 3, the beam-level mobility change acknowledge message includes beam-level mobility change acknowledge criticality diagnostics information, to provide error prompt information for each beam. It should be noted that Table 11 is merely an example. In this application, there is no limitation that the beam-level configuration acknowledge information is carried only in the mobility change acknowledge message. For example, the beam-level configuration acknowledge information may alternatively be carried in another message. Information elements included in the another message and related information are similar to those in Table 11. This is not specifically limited herein. In addition, the second message in this application may also include the cell-level mobility change acknowledge message shown in Table 3. In this case, the first message may indicate both the cell-level configuration success information and the beam-level configuration success information. It should be further noted that, values of the information element name, presence, range, information element type and reference, semantics description, criticality, assigned criticality, and the like are also not limited in Table 11. For example, a value of presence of the mobility change acknowledge criticality diagnostics information of the first beam may be mandatory, may be optional, or may be undefined. This is not limited in this application.

Example 5: When the second message indicates that the first access network device fails in configuration, the second message may be a mobility change failure message in the MSC procedure.

Compared with cell-level configuration failure information included in a current mobility change failure message, the second message in this application further includes beam-level configuration failure information. Specifically, the second message includes one or more of the following: the beam indication information of the first beam, mobility change failure cause information of the first beam, mobility change failure criticality diagnostics information of the first beam, mobility parameters modification range information of the first beam, the beam indication information of the second beam, and mobility change failure criticality diagnostics information of the second beam. The mobility change failure criticality diagnostics information may also be referred to as mobility change failure message criticality diagnostics information.

It may be understood that the beam indication information of the first beam in the example 5 may be classified into configuration-related beam indication information and/or criticality-diagnostics-related beam indication information. For the configuration-related beam indication information of the first beam, refer to the related descriptions of the beam indication information of the first beam in the foregoing example 1. Details are not described herein again. Optionally, the configuration-related beam indication information of the first beam may specifically indicate a beam that fails to be configured in the first access network device. Optionally, the configuration-related beam indication information of the first beam may specifically indicate all beams configured in the first access network device. The first beam that fails to be configured is represented by failure cause information and/or mobility parameters modification range information. Optionally, the first beam that fails to be configured may be indicated by specific identification information. This is not limited in this application. The criticality-diagnostics-related beam indication information of the first beam may specifically indicate a beam for which criticality diagnostics information needs to be sent in the mobility change failure message. Optionally, the criticality-diagnostics-related beam indication information of the first beam may specifically indicate all beams configured in the first access network device. A beam for which criticality diagnostics is configured is represented by criticality diagnostics information and/or presence or absence of the criticality diagnostics information. It should be further noted that the configuration-related beam indication information of the first beam may be the same as or different from the criticality-diagnostics-related beam indication information of the first beam. This is not limited herein.

It may be understood that the beam indication information of the second beam in the example 5 may be, for example, criticality-diagnostics-related beam indication information. The criticality-diagnostics-related beam indication information of the second beam may specifically indicate a beam for which criticality diagnostics information needs to be sent in the mobility change failure message. Optionally, the criticality-diagnostics-related beam indication information of the second beam may specifically indicate all beams configured in the second access network device. A beam for which criticality diagnostics is configured is represented by criticality diagnostics information and/or presence or absence of the criticality diagnostics information.

The mobility change failure cause information of the first beam indicates a reason why the first access network device sends the second message for the first beam. The second message indicates that the first access network device fails in configuration. To be specific, when the first beam of the first access network device fails to be configured, the second message carries the mobility change failure cause information of the first beam. The mobility change failure criticality diagnostics information of the first beam indicates that partial information of the first beam in the first message is incorrect. The mobility change failure criticality diagnostics information of the second beam indicates that partial information of the second beam in the first message is incorrect. The mobility parameters modification range information of the first beam indicates an allowed modification range of the handover trigger threshold change value of the first beam. For example, when the first beam includes a plurality of beams, allowed modification ranges of handover trigger threshold change values of the beams may be the same or may be different. In this case, the mobility parameters modification range information of the first beam includes the allowed modification ranges of the handover trigger threshold change values of the plurality of beams, and each modification range is associated with beam indication information of one beam. For example, a beam ID 1 is associated with an allowed modification range 1 of a handover trigger threshold change value of a beam, and a beam ID 2 is associated with an allowed modification range 2 of a handover trigger threshold change value of a beam. Values of the modification range 1 and the modification range 2 may be the same or may be different. This is not limited in this application. It may be understood that a value of the allowed modification range of the handover trigger threshold change value of the first beam is similar to a value of a cell-level mobility parameters modification range, for example, may be a positive integer greater than 1.

For example, Table 12 shows information elements included in a beam-level mobility change failure message provided in this application and related information.

**Table 12: Information elements included in a beam-level mobility change failure message and related information.**

| Information element name IE/ Group name | Presence Presence | Range Range | Information element type and reference IE type and reference | Semantics description Semantics description | Criticality Criticality | Assigned criticality Assigned criticality |
|---|---|---|---|---|---|---|
| Message type Message type | M | | 9.2.3.1 | | Yes | Reject |
| NG-RAN node 1 cell identity NG-RAN node 1 cell ID | M | | Global NG-RAN cell identity 9.2.2.27 | | Yes | Reject |
| NG-RAN node 2 cell identity NG-RAN node 2 cell ID | M | | Global NG-RAN cell identity 9.2.2.27 | | Yes | Reject |
| Beam indication information of the first beam (configuration-related beam indication information of the first beam) | O | | | | Yes | Ignore |
| > Mobility change failure cause information of the first beam Cause | O | | 9.2.3.2 | | | |

(continued)

| Information element name IE/ Group name | Presence Presence | Range Range | Information element type and reference IE type and reference | Semantics description Semantics description | Criticality Criticality | Assigned criticality Assigned criticality |
|---|---|---|---|---|---|---|
| > Mobility parameters modification range information of the first beam Mobility parameters modification range | O | | 9.2.2.61 | | | |
| Beam indication information of the first beam (criticality-diagnostics-related beam indication information of the first beam) | O | | | | Yes | Ignore |
| > Mobility change failure criticality diagnostics information of the first beam Criticality diagnostics | O | | 9.2.3.2 | | | |
| Beam indication information of the second beam (criticality-diagnostics-related beam indication information of the second beam) | O | | | | Yes | Ignore |
| > Mobility change acknowledge criticality diagnostics information of the second beam Criticality diagnostics | O | | 9.2.3.2 | | | |

It can be learned that, compared with Table 4, the beam-level mobility change failure message includes the beam-level configuration failure information, to provide mobility change failure cause information for each beam and mobility parameters modification range information for each beam, so that an access threshold can be properly adjusted based on a load status of each beam, to implement beam load balancing. The beam-level mobility change failure message further includes beam-level mobility change failure criticality diagnostics information, to provide error prompt information for each beam. It should be noted that Table 12 is merely an example. In this application, there is no limitation that the beam-level configuration failure information is carried only in the mobility change failure message. For example, the beam-level configuration failure information may alternatively be carried in another message. Information elements included in the another message and related information are similar to those in Table 12. This is not specifically limited herein. In addition, the second message in this application may also include the cell-level mobility change failure message shown in Table 4. In this case, the first message may indicate both the cell-level configuration failure information and the beam-level configuration failure information. It should be further noted that, values of the information element name, presence, range, information element type and reference, semantics description, criticality, assigned criticality, and the like are also not limited in Table 12. For example, a value of presence of the mobility change failure cause information of the first beam may be mandatory, may be optional, or may be undefined. This is not limited in this application. In addition, it should be noted that the configuration-related beam indication information of the first beam and the criticality-diagnostics-related beam indication information of the first beam are separately represented in this example, and may alternatively be combined together and represented by only the beam indication information of the first beam. This is not limited in this application. For example, the first beam indication information includes the mobility change failure cause information of the first beam, the mobility parameters modification range information of the first beam, and/or the mobility change failure criticality diagnostics information of the first beam.

Example 6: When the second message indicates that the first access network device succeeds in configuration, the second message may be a handover request acknowledge message in the CHO procedure.

Compared with cell-level conditional handover acknowledge information included in a current handover request acknowledge message, the second message in this application further includes beam-level conditional handover acknowledge information. Specifically, the second message includes information about the maximum number of conditional handover preparations of the first beam. The information about the maximum number of conditional handover preparations of the first beam indicates the maximum number of candidate first beams for conditional handover. For example, the information about the maximum number of conditional handover preparations of the first beam represents the maximum number of CHO candidate beams prepared in a candidate target cell for UE. In other words, the source base station does not prepare, for the candidate target cell and the UE, CHO candidate beams whose number exceeds the maximum number.

For example, Table 13 shows information elements included in a beam-level handover request acknowledge message provided in this application and related conditional handover acknowledge information.

**Table 13: Information elements included in a beam-level handover request acknowledge message and related conditional handover acknowledge information.**

| Information element name IE/Group name | Presence Presence | Range Range | Information element type and reference IE type and reference | Semantics description Semantics description | Criticality Criticality | Assigned criticality Assigned criticality |
|---|---|---|---|---|---|---|
| ... | ... | | ... | ... | ... | ... |
| Conditional handover information acknowledge | O | | | | Yes | Reject |
| > Requested target base station cell identity Requested target cell ID | M | | Target cell global ID 9.2.3.25 | Target cell indicated in the corresponding HANDOVER REQUEST message | | |
| >> Information about the maximum number of conditional handover preparations of the first beam | | | | | | |
| > Information about the maximum number of conditional handover preparations Maximum number of CHO preparations | O | | 9.2.3.101 | | | |
| ... | ... | | ... | | ... | ... |

It can be learned that, compared with Table 7, the beam-level handover request acknowledge message includes the beam-level conditional handover acknowledge information, and feeds back the maximum number of candidate beams that can be prepared in each cell for CHO access, to provide a scheduling reference for the source base station. Finally, this facilitates load balancing between base stations and load balancing between beams, thereby improving system performance. It should be noted that Table 13 is merely an example. In this application, there is no limitation that the beam-level conditional handover acknowledge information is carried only in the handover request acknowledge message. For example, the beam-level conditional handover acknowledge information may alternatively be carried in another message. Information elements included in the another message and related information are similar to those in Table 13. This is not specifically limited herein. In addition, the second message in this application may also include the cell-level handover request acknowledge message shown in Table 7. In this case, the first message may indicate both the cell-level conditional handover acknowledge information and the beam-level conditional handover acknowledge information. It should be further noted that, values of the information element name, presence, range, information element type and reference, semantics description, criticality, assigned criticality, and the like are also not limited in Table 13. For example, a value of presence of the information about the maximum number of conditional handover preparations may be mandatory, may be optional, or may be undefined. This is not limited in this application.

Example 7: When the second message indicates that the first access network device succeeds in configuration and that the first access network device fails in configuration, the second message may implement the two configurations described in the foregoing example 5 and example 6. For example, the second message includes a handover request acknowledge message in the CHO procedure and a mobility change failure message in the MSC procedure. To be specific, in the example 7, when the first access network device sends the second message to the second access network device, it indicates that beam-level mobility change parameters configuration of the first access network device fails, but beam-level handover configuration of the first access network device succeeds. For a specific implementation, refer to the corresponding descriptions in the foregoing example 5 and example 6. Details are not described herein again.

Example 8: When the second message indicates that the first access network device succeeds in configuration, the second message may implement the two configurations described in the foregoing example 4 and example 6. For example, the second message includes a handover request acknowledge message in the CHO procedure and a mobility change success message in the MSC procedure. To be specific, in the example 8, when the first access network device sends the second message to the second access network device, it indicates that beam-level mobility change parameters configuration of the first access network device succeeds, and beam-level handover configuration of the first access network device succeeds. For a specific implementation, refer to the corresponding descriptions in the foregoing example 4 and example 6. Details are not described herein again.

It should be noted that the foregoing example 1 to example 7 describe a case in which the source base station initiates the MSC procedure or the CHO procedure to the target base station when the first access network device is the target base station and the second access network device is the source base station. In a possible implementation, when the first access network device is the target base station and the second access network device is the source base station, the target base station may also initiate an MSC procedure to the source base station. In this case, step 501 is changed to step 501a: The first access network device sends a third message to the second access network device, where the third message indicates the second access network device to configure a handover trigger threshold change value of a second beam.

Specifically, the third message may be a mobility change request message in the MSC procedure. For example, the third message includes handover trigger configuration information of a first beam. The handover trigger configuration information of the first beam includes beam indication information of the first beam and/or mobility parameters information of the first beam. The mobility parameters information of the first beam includes a handover trigger threshold change value of the first beam and/or a handover trigger threshold of the first beam. It may be understood that, different from the first message, the third message is a message sent by the first access network device to the second access network device. In this case, the third message directly indicates the handover trigger threshold change value of the first beam and/or the handover trigger threshold of the first beam, instead of indicating a proposed handover trigger threshold change value of the first beam and/or a proposed handover trigger threshold of the first beam. The handover trigger threshold change value of the first beam and/or the handover trigger threshold of the first beam may be determined by the first access network device based on a load status of the beam of the first access network device. For a specific implementation, refer to the related descriptions in the example 1. Details are not described herein.

Further, the third message further includes handover trigger configuration information of the second beam of the second access network device. The handover trigger configuration information of the second beam includes beam indication information of the second beam and/or proposed mobility parameters information of the second beam. The proposed mobility parameters information of the second beam includes a proposed handover trigger threshold change value of the second beam and/or a proposed handover trigger threshold of the second beam. The proposed handover trigger threshold change value of the second beam and/or the proposed handover trigger threshold of the second beam are/is determined by the first access network device based on the load status of the beam of the first access network device and a load status of the beam of the second access network device. For a specific implementation, refer to the related descriptions in the example 1. Details are not described herein.

Optionally, the third message further includes cause information of sending the third message. The cause information of the third message indicates a handover trigger configuration cause of the first beam and/or a handover trigger configuration cause of the second beam. For a specific implementation of the cause information of the third message, refer to the descriptions of the cause information of the first message in the example 1. Details are not described herein.

Step 502 is changed to step 502a: The first access network device receives a fourth message from the second access network device, where the fourth message indicates that the second access network device succeeds in configuration and/or that the second access network device fails in configuration.

Specifically, that the second access network device succeeds in configuration indicates that the second access network device successfully configures, based on the third message, beam-level information carried in the third message. It may be understood that a specific implementation in which the second access network device succeeds in configuration is similar to the specific implementation, in which the first access network device succeeds in configuration, described in the example 4. For example, when the fourth message indicates that the second access network device succeeds in configuration, the fourth message may be a mobility change acknowledge message in the MSC procedure. The fourth message includes one or more of the following: the beam indication information of the first beam, mobility change acknowledge criticality diagnostics information of the first beam, the beam indication information of the second beam, and mobility change acknowledge criticality diagnostics information of the second beam. The mobility change acknowledge criticality diagnostics information of the first beam indicates that partial information of the first beam in the third message is incorrect. The mobility change acknowledge criticality diagnostics information of the second beam indicates that partial information of the second beam in the third message is incorrect. For specific descriptions of the mobility change acknowledge criticality diagnostics information of the first beam and the mobility change acknowledge criticality diagnostics information of the second beam, refer to the corresponding descriptions in the example 4. Details are not described herein again.

That the second access network device fails in configuration indicates that the second access network device rejects the beam-level information carried in the third message. It may be understood that a specific implementation in which the second access network device fails in configuration is similar to the specific implementation, in which the first access network device fails in configuration, described in the example 5. For example, when the fourth message indicates that the second access network device fails in configuration, the fourth message may be a mobility change failure message in the MSC procedure. The fourth message includes one or more of the following: the beam indication information of the second beam, mobility change failure cause information of the second beam, mobility change failure criticality diagnostics information of the second beam, mobility parameters modification range information of the second beam, the beam indication information of the first beam, and mobility change failure criticality diagnostics information of the first beam. The mobility change failure cause information of the second beam indicates a reason why the second access network device sends the fourth message for the second beam. The fourth message indicates that the second access network device fails in configuration. The mobility parameters modification range information of the second beam indicates an allowed modification range of the handover trigger threshold change value of the second beam. For specific descriptions of the beam indication information of the second beam, the mobility change failure cause information of the second beam, the mobility change failure criticality diagnostics information of the second beam, the mobility parameters modification range information of the second beam, the beam indication information of the first beam, and the mobility change failure criticality diagnostics information of the first beam, refer to the descriptions corresponding to the first beam and/or the second beam in the example 5. Specific implementations are similar. Details are not described herein.

It can be learned that when the target base station (the first access network device) initiates the MSC procedure to the source base station (the second access network device), the first access network device may send the proposed handover trigger threshold change value of the second beam to the second access network device, so that the source base station properly adjusts an access threshold of the second beam, thereby implementing inter-beam load balancing between base stations.

It should be noted that Table 1 to Table 13 described in this application are all examples, and entries in the tables are not limited in this application. For example, the criticality, the assigned criticality, and/or the like may not be included. Alternatively, other related information may be further included. This is not limited in this application.

FIG. 6 is a schematic flowchart of another information configuration method according to this application. The information configuration method may be applied to the communication system shown in FIG. 1. For example, the information configuration method may be implemented through interaction between a second access network device (a source base station) and a terminal device, and includes the following steps.

601: The second access network device sends a fifth message to the terminal device, where the fifth message includes conditional event configuration information for triggering, by the terminal device, access to a first access network device.

The conditional event configuration information for triggering, by the terminal device, access to the first access network device indicates a conditional event for triggering, by the terminal device, conditional handover for a first beam and a second beam. For example, the fifth message may be an RRC reconfiguration message, and the RRC reconfiguration message includes beam-level CHO configuration information. To be specific, in this application, beam-level related parameters are added based on parameters included in an existing conditional event A3 and conditional event A5. A conditional event for triggering conditional handover for the first beam includes, for example, a conditional event A3 and/or a conditional event A5 of the first beam, and a conditional event for triggering conditional handover for the second beam includes, for example, a conditional event A3 and/or a conditional event A5 of the second beam. Therefore, the RRC reconfiguration message includes a beam-level conditional event A3 and/or a beam-level conditional event A5. It should be noted that, in this application, only the conditional event A3 and the conditional event A5 are used as an example for description. The conditional event, for triggering conditional handover for the first beam and the second beam, described in this application may further include another type of CHO trigger event. This is not limited in this application.

Specifically, the conditional event for triggering conditional handover for the first beam and the second beam is determined based on measurement results of the first beam and the second beam and configuration information for the first beam and the second beam. For example, a parameter *Mn* in the existing conditional event A3 represents a measurement result of a neighboring cell. For the beam-level conditional event A3, a beam dimension is added to the existing parameter *Mn,* so that the parameter *Mn* represents a measurement result of a specific beam of the neighboring cell. For another example, a parameter *Ofn* in the existing conditional event A3 represents an individual offset of a measurement object of a reference signal of the neighboring cell. For the beam-level conditional event A3, a beam dimension is added to the parameter *Ofn*, so that the parameter *Ofn* represents an individual offset of a measurement object of a reference signal of a specific beam of the neighboring cell. To be specific, the conditional event for triggering conditional handover for the first beam is determined based on a measurement result of the first beam and configuration information for the first beam.

A conditional event A3 of the first beam and the second beam includes: when a condition A3-1 shown in Formula (1) is met, it is considered that the UE meets an entering condition of the conditional event A3; or when a condition A3-2 shown in Formula (2) is met, it is considered that the UE meets a leaving condition of the conditional event A3. A beam dimension is added to all parameters in Formula (1) and Formula (2). Specifically, *Mn* represents the measurement result of the first beam of the neighboring cell. *Mp* represents a measurement result of the second beam of a primary cell. *Ofn* represents an individual offset of a measurement object of a reference signal of the first beam of the neighboring cell. For example, an individual offset of an SSB and/or an individual offset of a CSI-RS of the reference signal of the neighboring cell: rsrpOffsetSSB, rsrqOffsetSSB, sinrOffsetSSB, rsrpOffsetCSI-RS, rsrqOffsetCSI-RS, and sinrOffsetCSI-RS each may be represented as a beam-level offset. For example, rsrpOffsetSSB is modified into a beam-level parameter rsrpOffsetSSB [neighboring cell beam ID]. It is equivalent that *Ofn* is set to different parameters rsrpOffsetSSB for different beams. *Ofp* represents an individual offset of a measurement object of the second beam of the primary cell. A specific implementation is similar to that of Ofn . Details are not described herein. *Ocn* represents a cell individual offset of the first beam of the neighboring cell. Specifically, *Ocn* is a cell individual offset that is of the neighboring cell and that is superimposed on the SSB and/or the CSI-RS. For example, rsrpOffsetSSB, rsrqOffsetSSB, sinrOffsetSSB, rsrpOffsetCSI-RS, rsrqOffsetCSI-RS, and sinrOffsetCSI-RS each may be represented as a beam-level offset. For example, rsrpOffsetSSB is modified into a beam-level parameter rsrpOffsetSSB [neighboring cell beam ID]. It is equivalent that *Ocn* is set to different parameters rsrpOffsetSSB for different beams. *Ocp* represents a cell individual offset of the second beam of the primary cell. A specific implementation is similar to that of *Ocn.* Details are not described herein. *Hys* represents a hysteresis parameter of the second beam of the primary cell and the first beam of the neighboring cell of the conditional event A3. For example, *Hys* is adjusted based on the primary cell beam ID and the neighboring cell beam ID, and may be represented as the following form: *Hys* [primary cell beam ID] [neighboring cell beam ID]. Therefore, *Hys* may be a matrix, where the number of rows is the number of beams of the primary cell, and the number of columns is the number of beams of the neighboring cell; may be represented as the following form: *Hys* [neighboring cell beam ID] [primary cell beam ID]; or may be represented as a table, a vector, or the like instead of a matrix. This is not limited in this application. *Off* represents an offset parameter of the second beam of the primary cell and the first beam of the neighboring cell of the conditional event A3. A specific implementation of *Off* is similar to that of *Hys.* For example, a beam-level value is added. Details are not described herein.

It may be understood that if the first beam includes a plurality of beams, each beam has corresponding *Mn, Ofn, Ocn*, *Hys, Mp, Ofp, Ocp,* and *Off* . A quantity corresponding to each parameter of the first beam is not limited to a value, and may alternatively be a vector, a matrix, or another representation form. Optionally, when calculation is performed for a beam of the neighboring cell by using a formula, the calculation corresponds to all beams of the cell. For example, when the first beam includes a plurality of beams, and it is determined, by using Formula (1), whether the UE meets the entering condition of the conditional event A3, *Mn* includes measurement results of all the beams of the neighboring cell. Meanings of other parameters are also similar. To be specific, when the first beam includes a plurality of beams, and it is determined, by using Formula (1), whether the UE meets the entering condition of the conditional event A3, a plurality of Formulas (1) need to be separately obtained based on parameters of the plurality of beams, to determine whether the UE meets the entering condition of the conditional event A3. If the second beam includes a plurality of beams, each beam also has corresponding *Mn, Ofn, Ocn, Hys*, *Mp, Ofp, Ocp,* and *Off.* A quantity corresponding to each parameter of the second beam is not limited to a value, and may alternatively be a vector, a matrix, or another representation form.

A conditional event A5 of the first beam and the second beam includes: when both a condition A5-1 shown in Formula (3) and a condition A5-2 shown in Formula (4) are met, it is considered that the UE meets an entering condition of the conditional event A5; or when a condition A5-3 shown in Formula (5) and/or a condition A5-4 shown in Formula (6) are/is met, it is considered that the UE meets a leaving condition of the conditional event A5. For descriptions of adding a beam dimension to *Mp, Mn, Ofn, Ocn,* and *Hys* to update *Mp, Mn, Ofn, Ocn,* and *Hys* to beam-level parameters, refer to the corresponding descriptions in the conditional event A3 of the first beam and the second beam. Details are not described herein. *Thresh1* represents a threshold parameter of the second beam of the primary cell of the conditional event A5. For example, *Thresh*1 is adjusted based on the primary cell beam ID, and may be represented as the following form: *Thresh*1 [primary cell beam ID]. Therefore, *Thresh*1 may be an array, where the number of elements in the array is the number of second beams of the primary cell. Alternatively, *Thresh1* may be represented as a table, a vector, or the like instead of an array. This is not limited in this application. *Thresh2* represents a threshold parameter of the first beam of the neighboring cell of the conditional event A5. For example, *Thresh*2 is adjusted based on the neighboring cell beam ID. A specific implementation is similar to that of *Thresh*1. Details are not described herein.

Optionally, before step 601, a base station (the source base station) of a serving cell of the UE may have sent a beam-level handover request message to a base station (the target base station) of the neighboring cell of the UE. For example, the second access network device has sent the beam-level handover request message described in the foregoing example 2 to the first access network device. The target base station has replied with a beam-level handover request acknowledge message. For example, the first access network device has sent the beam-level handover request acknowledge message described in the foregoing example 6 to the second access network device. For a specific implementation, refer to the corresponding descriptions in the example 2 and the example 6. Details are not described herein again.

Optionally, the method further includes step 602:

602: The terminal device sends a sixth message to the second access network device, where the sixth message indicates that the terminal device succeeds in configuration. To be specific, when the terminal device succeeds in configuration, the terminal device may feed back, to the source base station, that the configuration succeeds. Alternatively, the terminal device may not send the sixth message to the second access network device. A specific implementation is not limited in this application.

It can be learned that, in this application, the beam-level CHO configuration information, including the beam-level conditional event A3 and conditional event A5, may be introduced into the RRC reconfiguration message, so that conditional handover can be performed with reference to a measurement result of each beam, and conditional determining can be performed for each beam, to facilitate more accurate handover. This can facilitate load balancing between cells, and also facilitate load balancing between beams, thereby increasing a cell capacity and improving system performance.

To implement the functions in the method provided in this application, the apparatus or the device provided in this application may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions. The module division in this application is an example, and is merely logical function division. There may be another division manner during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

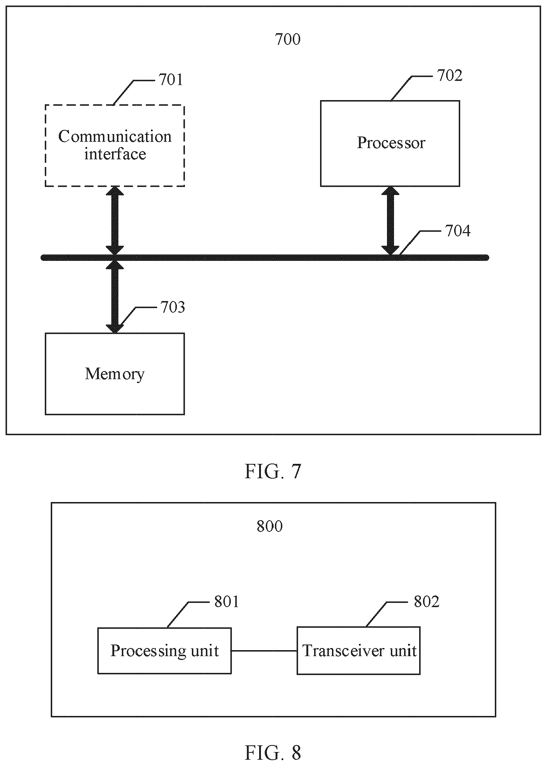

FIG. 7 shows a device 700 according to an embodiment of this application. The device 700 is configured to implement the information configuration methods in the foregoing method embodiments. The device may alternatively be a chip system. The device 700 includes a communication interface 701. The communication interface may be, for example, a transceiver, an interface, a bus, a circuit, or an apparatus that can implement a sending and receiving function. The communication interface 701 is configured to communicate with another device through a transmission medium, so that an apparatus in the access network device 700 can communicate with the another device. The device 700 further includes at least one processor 702. The processor 702 and the communication interface 701 are configured to implement the methods performed by the first access network device, the second access network device, or the terminal device in the method embodiments corresponding to FIG. 5 and FIG. 6.

For example, the communication interface 701 and the processor 702 are configured to implement the method performed by the first access network device in the method embodiment corresponding to FIG. 5. To be specific, the device 700 may be an access network device, an apparatus in the access network device, or an apparatus that can be used in a matching manner with the access network device. The communication interface 701 is configured to receive a first message from a second access network device. The first message indicates the first access network device to configure a handover trigger threshold change value of a first beam and/or a probability of handing over a terminal device to the first beam. The communication interface 701 is further configured to send a second message to the second access network device. The second message indicates that the first access network device succeeds in configuration and/or that the first access network device fails in configuration. The processor 702 is configured to determine the handover trigger threshold change value of the first beam and/or the probability of handing over the terminal device to the first beam. For a specific execution procedure of the communication interface 701 and the processor 702 in this example, refer to the detailed descriptions of the operations performed by the first access network device in the example 1 to the example 7 in FIG. 5. Details are not described herein again. In this example, according to the steps performed by the communication interface 701 and the processor 702, beam-level related configuration information can be added to a mobility configuration change procedure and/or a handover procedure, so that a user of a beam with relatively heavy load in the second access network device is handed over to a beam with relatively light load in the first access network device, thereby implementing beam load balancing.

For example, the communication interface 701 and the processor 702 are configured to implement the method performed by the first access network device in the method embodiment corresponding to FIG. 5. To be specific, the device 700 may be an access network device, an apparatus in the access network device, or an apparatus that can be used in a matching manner with the access network device. The communication interface 701 is configured to send a third message to a second access network device. The third message indicates the second access network device to configure a handover trigger threshold change value of a second beam. The communication interface 701 is further configured to receive a fourth message from the second access network device. The fourth message indicates that the second access network device succeeds in configuration and/or that the second access network device fails in configuration. The processor 702 is configured to determine a proposed handover trigger threshold change value of the second beam. For a specific execution procedure of the communication interface 701 and the processor 702 in this example, refer to the detailed descriptions of the operations performed by the first access network device in the example shown in step 501a and step 502a in FIG. 5. Details are not described herein again. In this example, according to the steps performed by the communication interface 701 and the processor 702, a target base station indicates a source base station to properly adjust an access threshold of the second beam, so that a user of a beam with relatively heavy load in the first access network device is handed over to a beam with relatively light load in the second access network device, thereby implementing beam load balancing.

For example, the communication interface 701 is configured to implement the method performed by the second access network device in the method embodiment corresponding to FIG. 5. To be specific, the device 700 may be an access network device, an apparatus in the access network device, or an apparatus that can be used in a matching manner with the access network device. The communication interface 701 is configured to send a first message to a first access network device. The first message indicates the first access network device to configure a handover trigger threshold change value of a first beam and/or a probability of handing over a terminal device to the first beam. The communication interface 701 is further configured to receive a second message from the first access network device, where the second message indicates that the first access network device succeeds in configuration and/or that the first access network device fails in configuration. For a specific execution procedure of the communication interface 701 in this example, refer to the detailed descriptions of the operations performed by the second access network device in the example 1 to the example 7 in FIG. 5. Details are not described herein again. In this example, according to the steps performed by the communication interface 701, a user of a beam with relatively heavy load in the second access network device is handed over to a beam with relatively light load in the first access network device, thereby implementing beam load balancing.

For example, the communication interface 701 is configured to implement the method performed by the second access network device in the method embodiment corresponding to FIG. 5. To be specific, the device 700 may be an access network device, an apparatus in the access network device, or an apparatus that can be used in a matching manner with the access network device. The communication interface 701 is configured to receive a third message from a first access network device. The third message indicates the second access network device to configure a handover trigger threshold change value of a second beam. The communication interface 701 is further configured to send a fourth message to the first access network device. The fourth message indicates that the second access network device succeeds in configuration and/or that the second access network device fails in configuration. For a specific execution procedure of the communication interface 701 in this example, refer to the detailed descriptions of the operations performed by the second access network device in the example shown in step 501a and step 502a in FIG. 5. Details are not described herein again. In this example, according to the steps performed by the communication interface 701, a target base station indicates a source base station to properly adjust an access threshold of the second beam, to facilitate beam load balancing.

For example, the communication interface 701 is configured to implement the method performed by the second access network device in the method embodiment corresponding to FIG. 6. To be specific, the device 700 may be an access network device, an apparatus in the access network device, or an apparatus that can be used in a matching manner with the access network device. The communication interface 701 is configured to send a fifth message to a terminal device. The fifth message includes conditional event configuration information for triggering, by the terminal device, access to a first access network device. The conditional event configuration information indicates a conditional event for triggering, by the terminal device, conditional handover for a first beam and a second beam. Optionally, the communication interface 701 is further configured to receive a sixth message from the terminal device. The sixth message indicates that the terminal device succeeds in configuration. For a specific execution procedure of the communication interface 701 in this example, refer to the detailed descriptions of the operations of the second access network device in the example in FIG. 6. Details are not described herein again. In this example, according to the steps performed by the communication interface 701, conditional handover can be performed with reference to measurement results of beams, and conditional determining can be performed for different beams, to facilitate more accurate handover, and further facilitate beam load balancing, thereby improving a cell capacity.

For example, the communication interface 701 and the processor 702 are configured to implement the method performed by the terminal device in the method embodiment corresponding to FIG. 6. To be specific, the device 700 may be a terminal device, an apparatus in the terminal device, or an apparatus that can be used in a matching manner with the terminal device. The communication interface 701 is configured to receive a fifth message from a second access network device. The fifth message includes conditional event configuration information for triggering, by the terminal device, access to a first access network device. The conditional event configuration information indicates a conditional event for triggering, by the terminal device, conditional handover for a first beam and a second beam. Optionally, the communication interface 701 is further configured to send a sixth message to the second access network device. The sixth message indicates that the terminal device succeeds in configuration. The processor 702 is configured to perform CHO conditional configuration based on the conditional event configuration information. For a specific execution procedure of the communication interface 701 and the processor 702 in this example, refer to the detailed descriptions of the operations of the terminal device in the example in FIG. 6. Details are not described herein again. In this example, according to the steps performed by the communication interface 701 and the processor 702, beam-level related configuration information can be added to a reconfiguration message, to facilitate more accurate handover, and further facilitate beam load balancing, thereby improving a cell capacity.

The device 700 may further include at least one memory 703, configured to store program instructions and/or data. In an implementation, the memory 703 is coupled to the processor 702. The coupling in this embodiment of this application may be an indirect coupling or a communication connection between apparatuses, units, or modules in an electrical form, a mechanical form, or another form, and is used for information exchange between the apparatuses, the units, or the modules. The processor 702 may perform an operation in collaboration with the memory 703. The processor 702 may execute the program instructions stored in the memory 703. At least one of the at least one memory may be included in the processor.

In this embodiment of this application, a specific connection medium between the communication interface 701, the processor 702, and the memory 703 is not limited. In this embodiment of this application, in FIG. 7, the memory 703, the processor 702, and the communication interface 701 are connected through a bus 604. The bus is represented by a thick line in FIG. 7. This is merely an example for description, and is not used as a limitation. Another connection manner between components may be used. The bus may be classified as an address bus, a data bus, a control bus, or the like. For ease of representation, only one thick line is used to represent the bus in FIG. 7, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by a combination of hardware in the processor and a software module.

In this embodiment of this application, the memory may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

FIG. 8 shows an apparatus 800 according to an embodiment of this application. In an implementation, the apparatus may include one-to-one corresponding modules for performing the methods/operations/steps/actions described in the examples corresponding to FIG. 5 and FIG. 6. The module may be implemented by a hardware circuit, may be implemented by software, or may be implemented by a hardware circuit in combination with software. In an implementation, the apparatus may include a processing unit 801 and a transceiver unit 802.

For example, the apparatus 800 may be an access network device, an apparatus in the access network device, or an apparatus that can be used in a matching manner with the access network device. The transceiver unit 802 is configured to receive a first message from a second access network device. The first message indicates the first access network device to configure a handover trigger threshold change value of a first beam and/or a probability of handing over a terminal device to the first beam. The transceiver unit 802 is further configured to send a second message to the second access network device. The second message indicates that the first access network device succeeds in configuration and/or that the first access network device fails in configuration. The processing unit 801 is configured to determine the handover trigger threshold change value of the first beam and/or the probability of handing over the terminal device to the first beam. For a specific execution procedure of the processing unit 801 and the transceiver unit 802 in this example, refer to the detailed descriptions of the operations performed by the first access network device in the example 1 to the example 7 in FIG. 5. Details are not described herein again. In this example, according to the steps performed by the processing unit 801 and the transceiver unit 802, beam-level related configuration information can be added to a mobility configuration change procedure and/or a handover procedure, so that a user of a beam with relatively heavy load in the second access network device is handed over to a beam with relatively light load in the first access network device, thereby implementing beam load balancing.

For example, the apparatus 800 may be an access network device, an apparatus in the access network device, or an apparatus that can be used in a matching manner with the access network device. The transceiver unit 802 is configured to send a third message to a second access network device. The third message indicates the second access network device to configure a handover trigger threshold change value of a second beam. The transceiver unit 802 is further configured to receive a fourth message from the second access network device. The fourth message indicates that the second access network device succeeds in configuration and/or that the second access network device fails in configuration. The processing unit 801 is configured to determine a proposed handover trigger threshold change value of the second beam. For a specific execution procedure of the processing unit 801 and the transceiver unit 802 in this example, refer to the detailed descriptions of the operations performed by the first access network device in the example shown in step 501a and step 502a in FIG. 5. Details are not described herein again. In this example, according to the steps performed by the processing unit 801 and the transceiver unit 802, a target base station indicates a source base station to properly adjust an access threshold of the second beam, so that a user of a beam with relatively heavy load in the first access network device is handed over to a beam with relatively light load in the second access network device, thereby implementing beam load balancing.

For example, the apparatus 800 may be an access network device, an apparatus in the access network device, or an apparatus that can be used in a matching manner with the access network device. The transceiver unit 802 is configured to send a first message to a first access network device. The first message indicates the first access network device to configure a handover trigger threshold change value of a first beam and/or a probability of handing over a terminal device to the first beam. The transceiver unit 802 is further configured to receive a second message from the first access network device, where the second message indicates that the first access network device succeeds in configuration and/or that the first access network device fails in configuration. For a specific execution procedure of the transceiver unit 802 in this example, refer to the detailed descriptions of the operations performed by the second access network device in the example 1 to the example 7 in FIG. 5. Details are not described herein again. In this example, according to the steps performed by the transceiver unit 802, a user of a beam with relatively heavy load in the second access network device is handed over to a beam with relatively light load in the first access network device, thereby implementing beam load balancing.

For example, the apparatus 800 may be an access network device, an apparatus in the access network device, or an apparatus that can be used in a matching manner with the access network device. The transceiver unit 802 is configured to receive a third message from a first access network device. The third message indicates the second access network device to configure a handover trigger threshold change value of a second beam. The transceiver unit 802 is further configured to send a fourth message to the first access network device. The fourth message indicates that the second access network device succeeds in configuration and/or that the second access network device fails in configuration. For a specific execution procedure of the transceiver unit 802 in this example, refer to the detailed descriptions of the operations performed by the second access network device in the example shown in step 501a and step 502a in FIG. 5. Details are not described herein again. In this example, according to the steps performed by the transceiver unit 802, a target base station indicates a source base station to properly adjust an access threshold of the second beam, to facilitate beam load balancing.

For example, the apparatus 800 may be an access network device, an apparatus in the access network device, or an apparatus that can be used in a matching manner with the access network device. The transceiver unit 802 is configured to send a fifth message to a terminal device. The fifth message includes conditional event configuration information for triggering, by the terminal device, access to a first access network device. The conditional event configuration information indicates a conditional event for triggering, by the terminal device, conditional handover for a first beam and a second beam. Optionally, the transceiver unit 802 is further configured to receive a sixth message from the terminal device. The sixth message indicates that the terminal device succeeds in configuration. For a specific execution procedure of the transceiver unit 802 in this example, refer to the detailed descriptions of the operations of the second access network device in the example in FIG. 6. Details are not described herein again. In this example, according to the steps performed by the transceiver unit 802, conditional handover can be performed with reference to measurement results of beams, and conditional determining can be performed for different beams, to facilitate more accurate handover, and further facilitate beam load balancing, thereby improving a cell capacity.

For example, the apparatus 800 may be a terminal device, an apparatus in the terminal device, or an apparatus that can be used in a matching manner with the terminal device. The transceiver unit 802 is configured to receive a fifth message from a second access network device. The fifth message includes conditional event configuration information for triggering, by the terminal device, access to a first access network device. The conditional event configuration information indicates a conditional event for triggering, by the terminal device, conditional handover for a first beam and a second beam. Optionally, the transceiver unit 802 is further configured to send a sixth message to the second access network device. The sixth message indicates that the terminal device succeeds in configuration. The processing unit 801 is configured to perform CHO conditional configuration based on the conditional event configuration information. For a specific execution procedure of the processing unit 801 and the transceiver unit 802 in this example, refer to the detailed descriptions of the operations of the terminal device in the example in FIG. 6. Details are not described herein again. In this example, according to the steps performed by the processing unit 801 and the transceiver unit 802, beam-level related configuration information can be added to a reconfiguration message, to facilitate more accurate handover, and further facilitate beam load balancing, thereby improving a cell capacity.

An embodiment of this application provides a computer-readable storage medium. The computer-readable storage medium stores a program or instructions. When the program is or the instructions are run on a computer, the computer is enabled to perform the information configuration methods shown in FIG. 5 and FIG. 6.

An embodiment of this application provides a chip or a chip system. The chip or the chip system includes at least one processor and an interface. The interface and the at least one processor are interconnected through a line. The at least one processor is configured to run a computer program or instructions, to perform the information configuration methods shown in FIG. 5 and FIG. 6.

The interface in the chip may be an input/output interface, a pin, a circuit, or the like.

The chip system in the foregoing aspect may be a system on chip (system on chip, SOC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in embodiments of this application may be implemented by software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clear that a person skilled in the art can make various modifications and variations to this application without departing from the scope of this application. In this way, this application is also intended to cover these modifications and variations to this application provided that they fall within the scope of the claims of this application and equivalent technologies thereof.

## Claims

1.  An information configuration method, comprising:

sending a first message to a first access network device, wherein the first message indicates the first access network device to configure a handover trigger threshold change value of a first beam and/or a probability of handing over a terminal device to the first beam; and

receiving a second message from the first access network device, wherein the second message indicates that the first access network device succeeds in configuration and/or that the first access network device fails in configuration.

2. The method according to claim 1, wherein the first message comprises handover trigger configuration information of the first beam, and the handover trigger configuration information of the first beam comprises beam indication information of the first beam and/or proposed mobility parameters information of the first beam; and

the proposed mobility parameters information of the first beam comprises a proposed handover trigger threshold change value of the first beam and/or a proposed handover trigger threshold of the first beam.

3. The method according to claim 1 or 2, wherein the first message further comprises handover trigger configuration information of a second beam of a second access network device, and the handover trigger configuration information of the second beam comprises beam indication information of the second beam and/or mobility parameters information of the second beam; and

the mobility parameters information of the second beam comprises a handover trigger threshold change value of the second beam and/or a handover trigger threshold of the second beam.

4. The method according to any one of claims 1 to 3, wherein the first message comprises cause information of sending the first message, and the cause information of the first message indicates a handover trigger configuration cause of the first beam and/or a handover trigger configuration cause of the second beam.

5. The method according to any one of claims 1 to 4, wherein the second message comprises one or more of the following: the beam indication information of the first beam, mobility change acknowledge criticality diagnostics information of the first beam, the beam indication information of the second beam, and mobility change acknowledge criticality diagnostics information of the second beam, wherein

the mobility change acknowledge criticality diagnostics information of the first beam indicates that partial information of the first beam in the first message is incorrect; and

the mobility change acknowledge criticality diagnostics information of the second beam indicates that partial information of the second beam in the first message is incorrect.

6. The method according to any one of claims 1 to 4, wherein the second message comprises one or more of the following: the beam indication information of the first beam, mobility change failure cause information of the first beam, mobility change failure criticality diagnostics information of the first beam, mobility parameters modification range information of the first beam, the beam indication information of the second beam, and mobility change failure criticality diagnostics information of the second beam, wherein

the mobility change failure cause information of the first beam indicates a reason why the first access network device sends the second message for the first beam, and the second message indicates that the first access network device fails in configuration; and

the mobility parameters modification range information of the first beam indicates an allowed modification range of the handover trigger threshold change value of the first beam.

7. The method according to claim 1, wherein the first message comprises conditional handover request information of the first beam, and the conditional handover request information of the first beam comprises beam indication information of the first beam and/or estimated arrival probability information of the first beam; and

the estimated arrival probability information of the first beam indicates the probability of handing over the terminal device to the first beam.

8. The method according to claim 1 or 7, wherein the second message comprises information about the maximum number of conditional handover preparations of the first beam, and the information about the maximum number of conditional handover preparations of the first beam indicates the maximum number of candidate first beams for conditional handover.

9. An information configuration method, comprising:

sending a third message to a second access network device, wherein the third message indicates the second access network device to configure a handover trigger threshold change value of a second beam; and receiving a fourth message from the second access network device, wherein the fourth message indicates that the second access network device succeeds in configuration and/or that the second access network device fails in configuration.

10. The method according to claim 9, wherein the third message comprises handover trigger configuration information of a first beam, and the handover trigger configuration information of the first beam comprises beam indication information of the first beam and/or mobility parameters information of the first beam; and the mobility parameters information of the first beam comprises a handover trigger threshold change value of the first beam and/or a handover trigger threshold of the first beam.

11. The method according to claim 9 or 10, wherein the third message further comprises handover trigger configuration information of the second beam of the second access network device, and the handover trigger configuration information of the second beam comprises beam indication information of the second beam and/or proposed mobility parameters information of the second beam; and the proposed mobility parameters information of the second beam comprises a proposed handover trigger threshold change value of the second beam and/or a proposed handover trigger threshold of the second beam.

12. The method according to any one of claims 9 to 11, wherein the third message comprises cause information of sending the third message, and the cause information of the third message indicates a handover trigger configuration cause of the first beam and/or a handover trigger configuration cause of the second beam.

13. The method according to any one of claims 9 to 12, wherein the fourth message comprises one or more of the following: the beam indication information of the first beam, mobility change acknowledge criticality diagnostics information of the first beam, the beam indication information of the second beam, and mobility change acknowledge criticality diagnostics information of the second beam, wherein

the mobility change acknowledge criticality diagnostics information of the first beam indicates that partial information of the first beam in the third message is incorrect; and the mobility change acknowledge criticality diagnostics information of the second beam indicates that partial information of the second beam in the third message is incorrect.

14. The method according to any one of claims 9 to 12, wherein the fourth message comprises one or more of the following: the beam indication information of the second beam, mobility change failure cause information of the second beam, mobility change failure criticality diagnostics information of the second beam, mobility parameters modification range information of the second beam, the beam indication information of the first beam, and mobility change failure criticality diagnostics information of the first beam;

the mobility change failure cause information of the second beam indicates a reason why the second access network device sends the fourth message for the second beam, and the fourth message indicates that the second access network device fails in configuration; and the mobility parameters modification range information of the second beam indicates an allowed modification range of the handover trigger threshold change value of the second beam.

15. An information configuration method, comprising:
sending a fifth message to a terminal device, wherein the fifth message comprises conditional event configuration information for triggering, by the terminal device, access to a first access network device, and the conditional event configuration information indicates a conditional event for triggering, by the terminal device, conditional handover for a first beam and a second beam.

16. The method according to claim 15, wherein the conditional event for triggering conditional handover for the first beam and the second beam is determined based on measurement results of the first beam and the second beam and configuration information for the first beam and the second beam.

17. An information configuration method, comprising:

receiving a first message from a second access network device, wherein the first message indicates a first access network device to configure a handover trigger threshold change value of a first beam and/or a probability of handing over a terminal device to the first beam; and

sending a second message to the second access network device, wherein the second message indicates that the first access network device succeeds in configuration and/or that the first access network device fails in configuration.

18. An information configuration method, comprising:

receiving a third message from a first access network device, wherein the third message indicates a second access network device to configure a handover trigger threshold change value of a second beam; and

sending a fourth message to the first access network device, wherein the fourth message indicates that the second access network device succeeds in configuration and/or that the second access network device fails in configuration.

19. An information configuration method, comprising:
receiving a fifth message from a second access network device, wherein the fifth message comprises conditional event configuration information for triggering, by a terminal device, access to a first access network device, and the conditional event configuration information indicates a conditional event for triggering, by the terminal device, conditional handover for a first beam and a second beam.

20. An information configuration apparatus, comprising:

a sending unit, configured to send a first message to a first access network device, wherein the first message indicates the first access network device to configure a handover trigger threshold change value of a first beam and/or a probability of handing over a terminal device to the first beam; and

a receiving unit, configured to receive a second message from the first access network device, wherein the second message indicates that the first access network device succeeds in configuration and/or that the first access network device fails in configuration.

21. An information configuration apparatus, comprising:

a sending unit, configured to send a third message to a second access network device, wherein the third message indicates the second access network device to configure a handover trigger threshold change value of a second beam; and

a receiving unit, configured to receive a fourth message from the second access network device, wherein the fourth message indicates that the second access network device succeeds in configuration and/or that the second access network device fails in configuration.

22. An information configuration apparatus, comprising:
a sending unit, configured to send a fifth message to a terminal device, wherein the fifth message comprises conditional event configuration information for triggering, by the terminal device, access to a first access network device, and the conditional event configuration information indicates a conditional event for triggering, by the terminal device, conditional handover for a first beam and a second beam.

23. An information configuration apparatus, comprising:

a receiving unit, configured to receive a first message from a second access network device, wherein the first message indicates the first access network device to configure a handover trigger threshold change value of a first beam and/or a probability of handing over a terminal device to the first beam; and

a sending unit, configured to send a second message to the second access network device, wherein the second message indicates that the first access network device succeeds in configuration and/or that the first access network device fails in configuration.

24. An information configuration apparatus, comprising:

a receiving unit, configured to receive a third message from a first access network device, wherein the third message indicates the second access network device to configure a handover trigger threshold change value of a second beam; and

a sending unit, configured to send a fourth message to the first access network device, wherein the fourth message indicates that the second access network device succeeds in configuration and/or that the second access network device fails in configuration.

25. An information configuration apparatus, comprising:
a receiving unit, configured to receive a fifth message from a second access network device, wherein the fifth message comprises conditional event configuration information for triggering, by the terminal device, access to a first access network device, and the conditional event configuration information indicates a conditional event for triggering, by the terminal device, conditional handover for a first beam and a second beam.

26. A communication system, comprising a first access network device and a second access network device, wherein

the first access network device is configured to perform functions of the first access network device in the information configuration method according to any one of claims 1 to 16; and
the second access network device is configured to perform functions of the second access network device in the information configuration method according to any one of claims 1 to 14.

27. The system according to claim 26, wherein the communication system further comprises a terminal device, and the terminal device is configured to perform functions of the terminal device in the method according to claims 15 and 16.

28. A computer-readable storage medium, wherein the computer-readable storage medium stores a computer program, and the computer program is executed by a processor to implement the method according to any one of claims 1 to 19.

FIG. 1

FIG. 2

```
┌─────────────────┐                           ┌─────────────────┐
│   NG-RAN node 1 │                           │   NG-RAN node 2 │
└─────────────────┘                           └─────────────────┘
```

Mobility change request (mobility change request)

Mobility change acknowledge (mobility change
acknowledge)

FIG. 3a

```
┌─────────────────┐                           ┌─────────────────┐
│   NG-RAN node 1 │                           │   NG-RAN node 2 │
└─────────────────┘                           └─────────────────┘
```

Mobility change request (mobility change request)

Mobility change failure (mobility change failure)

FIG. 3b

EP 4 436 256 A1

| Terminal device UE | Source base station | Target base station |

Send an RRC reconfiguration message to the UE

Send a measurement report to the source base station

Send a handover request message to the target base station

Send a handover acknowledge message to the source base station

Send a new RRC reconfiguration message to the UE

The UE initiates random access to the target base station

The UE sends an RRC reconfiguration complete message to the target base station

FIG. 4a

42

| Terminal device UE | Source base station | Candidate target base station 1 | Candidate target base station 2 |
|---|---|---|---|

Send an RRC reconfiguration message to the UE

Send a measurement report to the source base station

Send a handover request message (including conditional handover request information) to the candidate target base station 1

Send a handover acknowledge message (including conditional handover acknowledge information) to the source base station

Send a handover request message (including conditional handover request information) to the candidate target base station 2

Send a handover acknowledge message (including conditional handover request information) to the source base station

Send CHO configuration information to the UE

Determine whether a conditional handover trigger condition is met; and if the conditional handover trigger condition is met, determine a target base station

Initiate random access to the target base station

Send a CHO conditional handover complete message to the target base station

FIG. 4b

```
┌──────────────────┐                              ┌──────────────────┐
│  Second access   │                              │ First access network │
│  network device  │                              │       device      │
└──────────────────┘                              └──────────────────┘
```

501: Send a first message to the first access
network device, where the first message indicates
the first access network device to configure a
handover trigger threshold change value of a first
beam and/or a probability of handing over a
terminal device to the first beam

502: Send a second message to the second
access network device, where the second
message indicates that the first access network
device succeeds in configuration and/or that the
first access network device fails in configuration

FIG. 5

```
┌──────────────────┐                              ┌──────────────────┐
│  Second access   │                              │  Terminal device  │
│  network device  │                              │                   │
└──────────────────┘                              └──────────────────┘
```

601: Send a fifth message to the terminal
device, where the fifth message includes
conditional event configuration information for
triggering, by the terminal device, access to a
first access network device

602: Send a sixth message to the second
access network device, where the sixth
message indicates that the terminal device
succeeds in configuration

FIG. 6

700

701

Communication interface

702

Processor

704

703

Memory

FIG. 7

800

801

Processing unit

802

Transceiver unit

FIG. 8

## INTERNATIONAL SEARCH REPORT

| | International application No. |
|---|---|
| | **PCT/CN2022/140753** |

### A. CLASSIFICATION OF SUBJECT MATTER

H04W36/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 切换, 波束, 负载, 均衡, 触发, 阈值, 门限, 配置, 预计, 到达, 概率, 移动性, 失败, handover, HO, beam, load, balancing, trigger, threshold, configuration, estimated, arrival, probability, mobility, failure

### C. DOCUMENTS CONSIDERED TO BE RELEVANT

| Category* | Citation of document, with indication, where appropriate, of the relevant passages | Relevant to claim No. |
|---|---|---|
| X | CN 111372293 A (HUAWEI TECHNOLOGIES CO., LTD.) 03 July 2020 (2020-07-03) description paragraphs 228-505 | 15-16, 19, 22, 25, 26-28 |
| A | CN 112291821 A (RESEARCH INSTITUTE OF CHINA MOBILE COMMUNICATIONS CORPORATION et al.) 29 January 2021 (2021-01-29) entire document | 1-28 |
| A | CN 113455048 A (TELEFONAKTIEBOLAGET LM ERICSSON (PUBL)) 28 September 2021 (2021-09-28) entire document | 1-28 |
| A | WO 2020167198 A1 (TELEFONAKTIEBOLAGET LM ERICSSON (PUBL)) 20 August 2020 (2020-08-20) entire document | 1-28 |
| X | QUALCOMM INC. "Enhancements to Mobility Settings Change Procedure" *3GPP TSG-RAN WG3 Meeting #109e R3-206187*, 23 October 2020 (2020-10-23), section 2 | 1-6, 8-14, 17-18, 20-21, 23-24, 26-28 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2023** | **28 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
|---|
| **PCT/CN2022/140753** |

**Box No. III**     **Observations where unity of invention is lacking (Continuation of item 3 of first sheet)**

This International Searching Authority found multiple inventions in this international application, as follows:

The first group of claims, namely, claims 1-14, 17-18, 20-21, 23-24 and 26-28 (in part), relate to an information configuration method for an access network device, an apparatus, a system, and a readable storage medium; and the second group of claims, namely, claims 15-16, 19, 22, 25 and 26-28 (in part) relate to an information configuration method for a terminal device, an apparatus, a system, and a readable storage medium. The two groups of claims do not have the same or corresponding special technical feature that defines a contribution which the inventions make over the prior art, do not have a technical relationship therebetween, do not fall within a single general inventive concept, and therefore do not satisfy the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2022/140753**

| Patent document cited in search report | | | Publication date (day/month/year) | Patent family member(s) | | | Publication date (day/month/year) |
|---|---|---|---|---|---|---|---|
| CN | 111372293 | A | 03 July 2020 | JP | 2022515840 | A | 22 February 2022 |
| | | | | WO | 2020135400 | A1 | 02 July 2020 |
| | | | | EP | 3893548 | A1 | 13 October 2021 |
| | | | | EP | 3893548 | A4 | 19 January 2022 |
| | | | | US | 2021321313 | A1 | 14 October 2021 |
| | | | | CN | 111372293 | B | 21 December 2021 |
| | | | | VN | 80733 | A | 27 September 2021 |
| | | | | IN | 202147029853 | A | 09 July 2021 |
| CN | 112291821 | A | 29 January 2021 | None | | | |
| CN | 113455048 | A | 28 September 2021 | WO | 2020167197 | A1 | 20 August 2020 |
| | | | | US | 2022110039 | A1 | 07 April 2022 |
| | | | | EP | 3925288 | A1 | 22 December 2021 |
| WO | 2020167198 | A1 | 20 August 2020 | EP | 3925299 | A1 | 22 December 2021 |

Form PCT/ISA/210 (patent family annex) (July 2022)

**EP 4 436 256 A1**

**Patent documents cited in the description**

- CN 202210012904